# EUROPÄISCHE PATENTSCHRIFT

(11) **EP 3 825 674 B1**
(45) Veröffentlichungstag und Bekanntmachung des Hinweises auf die Patenterteilung: **20.09.2023**
(21) Anmeldenummer: 21151063.1
(22) Anmeldetag: 22.09.2017
(51) Int. Cl.: G01M 3/32, G01M 99/00, B29C 49/04, B29C 49/22, B29L 9/00

(54) **VERFAHREN ZUR BILDUNG UND/ODER ZUM TEST EINES BEUTELS IM INNENRAUM EINES BEHÄLTERS**
METHOD FOR FORMING AND/OR TESTING A BAG INSIDE A CONTAINER
PROCÉDÉ DE FORMATION ET/OU DE TEST D'UNE POCHE À L'INTÉRIEUR D'UN RÉCIPIENT

(30) Priorität: 26.09.2016 EP 16020352
(43) Veröffentlichungstag der Anmeldung: 26.05.2021
(62) Teilanmeldung aus: 17777167.2
(73) Patentinhaber: Boehringer Ingelheim International GmbH, 55216 Ingelheim am Rhein (DE)
(72) Erfinder: MATHE, Gerald, 55216 Ingelheim am Rhein (DE); COSTA PEREIRA-KIRCHWEHM, Carlos-Manuel, 55216 Ingelheim am Rhein (DE)
(74) Vertreter: Weyers, Christopher

(56) Entgegenhaltungen:
- DE-A1-102006 012 487
- EDER F X: "MODERNE MESSMETHODEN DER PHYSIK. TEIL I MECHANIK-AKUSTIK. VOLUMENOMETER, PASSAGE", HOCHSCHULBUECHER FUER PHYSIK, XX, XX, Bd. 1, 1. Januar 1952 (1952-01-01), Seite 78, XP002072641,

## Beschreibung

Die vorliegende Erfindung betrifft grundsätzlich Behälter mit innenliegendem Beutel.

Behälter der in Rede stehenden Art sind einerseits zur Separation von Inhalt und Treibmittel bekannt, beispielsweise aus der DE 2 927 708 A1 betreffend einen Behälter zur Bildung einer Sprühdose. Hierbei trennt der innenliegende Beutel ein in dem Beutel befindliches Medium wie eine Flüssigkeit von einem Treibmittel, das den Beutel umgibt bzw. zwischen dem Beutel und der Innenseite einer Wand des Behälters angeordnet ist. Andererseits sind beispielsweise aus der DE 2 438 298 A1 oder der GB2155117 A1 aus dem Bereich von Dispensern für Kosmetika Behälter mit innenliegendem Beutel auch ohne Treibmittel bekannt.

Aus der WO 01/76849 A1 ist ein Behälter bekannt, bei dem ein Beutel im Innenraum des Behälters ausgebildet ist. Der Behälter weist eine Öffnung für die Entnahme eines in dem Beutel befindlichen Mediums und zusätzlich eine Belüftungsöffnung auf, die ein Ein- und Ausströmen von Umgebungsluft auf der dem Medium abgewandten Seite zwischen Behälterwand und Beutel ermöglicht. Der Beutel ist hierbei kollabierbar. Ein Unterdruck, der bei Entnahme von Medium aus dem Beutel erzeugt wird, kann angesichts der durch die Belüftungsöffnung auf die Beutel-Umgebung einströmende Luft durch Kollabieren des Beutels ausgeglichen bzw. verhindert werden.

Es erfolgt ferner keine über die Bodennaht hinausgehende Vorablösung des Innenbeutels. Es ist darüber hinaus möglich, dass der Beutel sich ungünstig löst, sodass ein erhöhtes Restvolumen bei der Entnahme von Beutelinhalt verbleibt, beispielsweise wenn ein Mündungsbereich des Innenbeutels blockiert wird. Es gibt zudem keinen Hinweis auf eine Beschleunigung oder Verbesserung der Herstellung des Behälters oder einer Prüfung des Behälters. Weiter gibt es keinen Hinweis auf eine vorteilhafte Ausgestaltung einer Anlage.

Die AU 2014 355 544 A1 betrifft einen Behälter mit einem Innenbeutel, bei dem ein Zwischenraum zwischen einer äußeren Hülle und dem Innenbeutel gebildet wird, indem ein Loch in der äußeren Hülle erzeugt wird, das den Zwischenraum in dem Aufnahmeabschnitt mit dem Außenraum verbindet.

Durch Blasen von Luft durch das Loch wird der Beutel vorabgelöst. Dieser Ablöseprozess ist jedoch insbesondere dann problematisch, wenn das Beutelmaterial produktionsbedingt stärker anhaftet, denn dann wird entweder das Beutelmaterial gedehnt und kann durchlässig oder brüchig werden oder die Vorablösung bleibt unvollständig und der folglich nicht vollständig kollabierbare Beutel verhindert eine spätere vollständige Produktentnahme aus dem Beutel. Weiter gibt es keinen Hinweis auf eine vorteilhafte Ausgestaltung einer Anlage.

Ferner betrifft die AU 2014 355 544 A1 eine Dichtigkeitskontrolle durch Einlass von Edelgas und die Detektion des Edelgases zur Bestimmung der Dichtigkeit. Durch den Einsatz von Edelgas ist dieses Verfahren jedoch teuer und erfordert aufwendige Edelgas-Rückgewinnungsanlagen. Weiter gibt es keinen Hinweis auf eine vorteilhafte Ausgestaltung einer Anlage.

Die US 2004/0112921 A1 betrifft einen Behälter, der eine äußere Schicht aus Kunstharz mit einem Luftansaugloch und eine Innenschicht aus Kunstharz umfasst, die separat laminiert auf der Innenseite der äußeren Schicht vorgesehen ist. Die innere Schicht weist einen Abschnitt, der zuvor von der äußeren Schicht zuvor um das Luftsaugloch getrennt worden ist. Das Luftansaugloch kann durch Treiben eines Stempels in die äußere Schicht an einem Hals des Behälters von außen hergestellt werden, wodurch nur die äußere Schicht durchstoßen wird, nicht jedoch die die innere Schicht. Ein Ablösen der inneren Schicht ist bei Produktentnahme vorgesehen, was durch die Vorablösung im Halsbereich erleichtert werden soll. Der Vorablöseprozess erfolgt nur in einem kleinen Abschnitt, sodass eine Entnahme von Inhalt nur unter erheblichem Differenzdruck erfolgen kann, der zur Fortsetzung der Ablösung ausreicht.

Ferner ist die Innenschicht durch eine Klebeschicht abseits des Luftansauglochs vorgesehen und kann linear entlang einer Längsachse, an einer Umfangslinie oder punktförmig vorgesehen sein. Die Herstellung einer abschnittsweisen Klebeverbindung ist jedoch aufwendig und produktionstechnisch schwierig und erfordert sowohl einen Klebstoff, der die ansonsten voneinander gut lösbaren Materialien verklebt und zudem im Herstellungsprozess eingebracht werden kann, was sowohl produktionstechnisch aufwendig ist als auch den Einsatz zusätzlicher Werkstoffe erfordert. Weiter gibt es keinen Hinweis auf eine vorteilhafte Ausgestaltung einer Anlage.

Die DE 10 2006 012 487 A1 betrifft ein Verfahren zur Herstellung eines Behälters, der einen im wesentlichen steifen Außenbehälter und einen leicht verformbaren Innenbeutel enthält, die aus thermoplastischen Kunststoffen bestehen, die keine Schweißverbindung miteinander eingehen, wobei der Behälter eine Behälteröffnung und der Außenbehälter wenigstens eine Wandöffnung hat, durch die ein Druckausgleich in dem Zwischenraum zwischen dem Innenbeutel und dem Außenbehälter erfolgt, wenn sich der Innenbeutel infolge der Abgabe seines Inhalts zusammenzieht. Die Behälteröffnung wird abgedichtet und auf an sich bekannte Weise die wenigstens eine Wandöffnung dadurch ausgebildet, dass die Wand des Außenbehälters von einem Bohrer oder einer Einstechnadel durchbohrt oder durchstoßen wird, wobei nach vollständiger Durchdringung der Wand des Außenbehälters ein Druckmedium, vorzugsweise Druckluft, in den Zwischenraum zwischen dem Behälter und dem Innenbeutel eingeführt wird. Es können entsprechend mehrere Wandöffnungen gebildet werden. Dieses Verfahren ist dadurch jedoch sehr aufwendig und erfordert den Einsatz mehrerer Bohrer oder eine Anlage zur Repositionierung von Bohrern oder eine Kombination. Zudem besteht ein Nachteil darin, dass die Herstellung der Bohrungen stets die Gefahr einer Beschädigung oder jedenfalls Schwächung des Innenbeutels. Entsprechend wird der Innenbeutel strapaziert und neigt zu Defekten. Weiter gibt es keinen Hinweis auf eine vorteilhafte Ausgestaltung einer Anlage.

Die EP 0 313 678 A1 betrifft ein Verfahren und eine Anordnung zur Dichteprüfung mindestens eines Hohlkörpers und/oder zur Erfassung seiner Volumenänderung aufgrund einer Druckbeanspruchung seiner Wände und eine Verwendung des Verfahrens bzw. der Anordnung für flexible Hohlkörper, wie Kaffee-Verpackungen. Hierbei wird der in sich verschlossene Hohlkörper vollständig in eine Kammer eingebracht, die Kammer unter Druck gesetzt und bei Druckänderung eine Undichtigkeit detektiert. Dieses Verfahren ist ausreichend und geeignet für geschlossene Kaffeekapseln, jedoch ungenau dadurch, dass Druckveränderungen auch durch Verformung hervorgerufen können und die Volumenänderung für eine Detektion nur bei großen Lecks für eine Detektion ausreicht. Es gibt es keinen Hinweis auf eine vorteilhafte Ausgestaltung einer Anlage, mit der ein Behälter hergestellt oder mit der ein Behälter genauer oder schneller getestet werden könnte.

Die WO 01/39957 betrifft ein Verfahren zur Herstellung von Behältern bestehend aus einem steifen, im wesentlichen formstabilen Außenbehälter und einem leicht verformbaren Innenbehälter (zweischichtiger Behälter), der so mit dem Außenbehälter verbunden ist, dass ein sich darin befindliches Mediums durch Anlegen eines Unterdrucks vollständig abgesaugt werden kann. An den Schultern des Behälters sind Quetschnähte vorgesehen, die dauerhaft geöffnet bleiben. Folglich kann Luft in den Zwischenraum zwischen Außenbehälter und Innenbehälter einströmen. Dies ändert nichts an der Notwendigkeit, die Adhäsion des Innenbehälters mittels entsprechender Druckdifferenz zu überwinden. Auch ist nicht ersichtlich, wie dies schonend oder derart erfolgen kann, dass der Innenbehälter sich bei Entnahme des Inhalts nicht blockierend vor die Behälteröffnung legt und folglich eine vollständige Entnahme von Inhalt verhindert wird. Es gibt ferner keinen Hinweis auf eine Beschleunigung oder Verbesserung der Herstellung des Behälters oder einer Prüfung des Behälters. Weiter gibt es keinen Hinweis auf eine vorteilhafte Ausgestaltung einer Anlage.

Die DE 84 33 745.1 U1 betrifft einen Behälter mit beutelartigem Innenbehälter. Durch Verwendung eines Tauchrohres soll eine möglichst vollständige Entleerung ermöglicht werden. Im Halsbereich kann eine Verankerung des Innenbehälters erfolgen, während im Bodenbereich eine Öffnung des Behälters gebildet wird. Eine zufällige Blockade des Tauchrohrs wird hierdurch nicht vermieden. Es gibt auch hier keinen Hinweis auf eine Beschleunigung oder Verbesserung der Herstellung des Behälters oder einer Prüfung des Behälters. Weiter gibt es keinen Hinweis auf eine vorteilhafte Ausgestaltung einer Anlage.

Die EP 2 172 400 A1 betrifft einen Blasformprozess zur Herstellung eines Behälters mit Innenbehälter, bei dem eine Öffnung des Behälters im Bodennahtbereich erfolgt. Eine zufällige Blockade des Tauchrohrs wird hierdurch nicht vermieden. Es gibt zudem keinen Hinweis auf eine Beschleunigung oder Verbesserung der Herstellung des Behälters oder einer Prüfung des Behälters. Weiter gibt es keinen Hinweis auf eine vorteilhafte Ausgestaltung einer Anlage.

Die US 2002/001687 A1 einen Behälter mit beutelartigem Innenbehälter. Ein bodenseitiger Nahtbereich wird hierbei zur Bildung einer Belüftungsöffnung verwendet. Es gibt jedoch auch hier keinen Hinweis auf eine Beschleunigung oder Verbesserung der Herstellung des Behälters oder einer Prüfung des Behälters. Weiter gibt es keinen Hinweis auf eine vorteilhafte Ausgestaltung einer Anlage.

Aufgabe der vorliegenden Erfindung ist es, ein Verfahren und ein zugehöriges Computerprogrammprodukt und eine Anlage und ihre Verwendung anzugeben, womit ein Behälter mit innenliegendem Beutel erzeugt werden kann. Des Weiteren ist eine Aufgabe der vorliegenden Erfindung, einen Behälter mit innenliegendem Beutel anzugeben, bei dem die Funktion des Behälters und/oder die Zuverlässigkeit der Kollabierbarkeit bzw. des Druckausgleichs verbessert ist.

Diese Aufgabe wird durch ein Verfahren gemäß Anspruch 1 eine Anlage gemäß Anspruch 10, ein Computerprodukt gemäß Anspruch 14 oder eine Verwendung gemäß Anspruch 15 gelöst. Vorteilhafte Weiterbildungen sind Gegenstand der Unteransprüche.

Die vorliegende Erfindung betrifft Behälter mit innenliegendem Beutel, bei denen durch Ablösen von Beutelmaterial von einer Innenseite einer Wand des Behälters ein in dem Behälter befindlicher Beutel gebildet wird oder die Kollabierbarkeit des Beutels sichergestellt wird. Hierbei weist der Behälter eine Entnahmeöffnung zur Entnahme eines in dem Beutel befindlichen oder einfüllbaren Mediums und eine Belüftungsöffnung auf, durch die Umgebungsluft für einen Druckausgleich zur Außenseite des Beutels gelangen kann.

Der Innenraum des Behälters bzw. das durch eine ein dem Behälter seine Form verleihende Wand gebildete Volumen weist eine der Entnahmeöffnung zugeordnete Entnahmeseite und eine der Belüftungsöffnung zugeordnete Belüftungsseite auf, die durch das Beutelmaterial voneinander getrennt sind. Insbesondere ist vorgesehen, dass der Beutel bzw. das Beutelmaterial (das den Beutel bildende Material) eine Barriere zwischen unterschiedlichen Abschnitten des Innenraums des Behälters bildet und hierdurch den mit der Entnahmeöffnung fluidisch verbundenen Innenraum des Beutels von der mit der Außenseite des Beutels verbundenen Belüftungsöffnung, insbesondere fluiddicht und/oder vorzugsweise luftdicht, trennt.

Die Entnahmeseite entspricht der Innenseite des Beutels oder ist dieser zugeordnet. Mit anderen Worten entspricht die Entnahmeseite dem von dem Beutel bzw. dem den Beutel bildenden Material umschlossenen Raum oder ist hiermit fluidisch verbunden.

Die Belüftungsseite entspricht der Außenseite des Beutels oder ist dieser zugeordnet. Mit anderen Worten entspricht die Belüftungsseite dem zwischen der Innenseite des Außenbehälters und dem Beutel bzw. dem den Beutel bildenden Material ausgebildeten Raum oder ist hiermit fluidisch verbunden.

Zur Bildung bzw. Ablösung des Beutels im Innenraum des Behälters das in einem Ausgangszustand an der Innenseite der Wand des Behälters anhaftende Beutelmaterial dadurch abgelöst, dass ein Differenzdruck zwischen der Belüftungsseite und der Entnahmeseite erzeugt bzw. ein geringerer Druck an der Entnahmeseite als an der Belüftungsseite erzeugt wird, wobei durch das Lösen des Beutelmaterials der Beutel gebildet wird und/oder die Kollabierbarkeit des Beutels sichergestellt wird. Bevorzugt wird der Beutel hierbei sukzessive von der Innenseite der Wand des Behälters abgelöst, indem der Differenzdruck zwischen der Belüftungsseite und der Entnahmeseite alternierend verändert wird.

Der Behälter weist vorzugsweise einen im Wesentlichen formsteifen oder formstabilen Außenbehälter auf, der durch die Wand des Behälters gebildet ist.

Der Behälter wird vorzugsweise durch ein Extrusions-Blasverfahren hergestellt, wobei aus dem die Wand bildenden Material (insbesondere nach geeigneter Erwärmung) zunächst ein Schlauch gebildet wird. Im Anschluss kann dieser Schlauch in die Behälterform gebracht werden. Vorzugsweise wird hierzu durch eine Schlauchöffnung Gas, insbesondere Luft, eingeleitet, so dass das Schlauchmaterial von innen gegen die Form gedrückt bzw. geblasen wird (Abformschritt im Fertigungsverfahren).

Es ist besonders bevorzugt, dass das Beutelmaterial bei der Herstellung des Behälters mit dem die Wand des Behälters bildenden Material koextrudiert wird. Hierbei werden gleichzeitig zwei koaxiale und unmittelbar aneinander anliegende Schläuche bzw. ein zweischichtiger Schlauch gebildet. Die beiden Schläuche bzw. die beiden Schichten bestehen vorzugsweise aus unterschiedlichen Materialien. Der äußere Schlauch bzw. die äußere Schicht des Schlauchs bildet die spätere Wand (Außenseite) und der innere Schlauch bzw. die innere Schicht des Schlauchs bildet den späteren Beutel (Innenseite) des Behälters. Hierbei bleibt das Beutelmaterial vorzugsweise von dem die Wand des Behälters bildenden Material trennbar, beispielsweise durch Verwendung von Kunststoffen, die keine dauerhafte, untrennbare Verbindung miteinander eingehenden, bevorzugt durch die Verwendung von verschiedenen thermoplastischen Kunststoffen und/oder durch Verwendung eines Trennmittels.

Aus mittels der beschriebenen Koextrusion oder auf andere Weise erzeugten, koaxialen und unmittelbar aneinander anliegenden Schläuchen, welche die Wand (Außenseite) und den Beutel (Innenseite) bildende Materialien darstellen, wird vorzugsweise mittels eines Blasverfahrens, der Behälter erzeugt. Im Anschluss haftet das Beutelmaterial noch an der Innenseite der Wand des Behälters an.

Die Aspekte der vorliegenden Erfindung sind besonders vorteilhaft bei in der zuvor beschriebenen Weise hergestellten Behältern, können jedoch auch bei auf andere Weise gebildete Behälter anwendbar sein, bei denen vorzugsweise, insbesondere fertigungsbedingt, ein Beutelmaterial zunächst an der Innenwand des Behälters anhaftet.

Eine solche Anhaftung des Beutelmaterials an der Wand des Behälters beeinträchtigt die Kollabierbarkeit des Beutels: Wenn nun der Beutel bzw. das durch das Beutelmaterial umschlossene Volumen mit einem Produkt gefüllt und anschließend das Produkt entnommen wird, bildet sich ein Unterdruck im Behälter. Erst wenn der Unterdruck so groß wird, dass er den durch die Haftkraft erzeugten Gegendruck ausgleicht oder übersteigt, löst sich das Beutelmaterial unter Bildung des Beutels von der Wand des Behälters ab und ein Druckausgleich durch Kollabierung bzw. Verkleinerung des Innenvolumens des Beutels kann stattfinden. Da das Vorliegen eines Unterdrucks im Beutel sich nachteilig auf die Produktentnahme aus dem Beutel auswirkt, hat es sich als vorteilhaft erwiesen, das Beutelmaterial bereits vor einer Befüllung des Behälters bzw. Beutels von der Wand zu lösen und somit die Kollabierbarkeit des Beutels schon für die erste Produktentnahme sicherzustellen. Als besonders vorteilhaft hat sich hierbei die Verwendung des vorschlagsgemäßen alternierenden Differenzdrucks gezeigt, da hierdurch das Beutelmaterial auf schonende Weise sukzessiv gelöst wird. Durch das Ablöseverfahren bedingte Beschädigungen am Beutel können so vermieden werden.

Ein Aspekt der vorliegenden Erfindung betrifft ein Verfahren zur Ermittlung eines Volumens, um das der Beutel kollabierbar ist, eines Ablösegrads des Beutels von der Innenwand des Behälters und/oder einer hierzu korrespondierenden Kenngröße.

Unter dem Ablösegrad ist streng genommen ein Quotient zu verstehen, bei dem der Anteil der Wandoberfläche, von welcher der Beutel abgelöst wurde, dem Anteil der gesamten inneren Wandoberfläche gegenübergestellt wird. Eine direkte Bestimmung des Ablösegrads ist allerdings kaum möglich, so dass, wenn hier von der Ermittlung des Ablösegrads gesprochen wird, eine oder mehrere Kenngrößen überprüft werden, welche mit dem Ablösegrad korrelieren. Hierbei wird vorzugsweise ausgenutzt, dass die Fähigkeit zur Volumenänderung bzw. die Kollabierbarkeit des Beutels von dem Ablösegrad abhängt: Bei Vorliegen einer Druckdifferenz, bei welcher der belüftungsseitige Druck größer als der entnahmeseitige Druck ist, kann der Beutel nur dort kollabieren, wo er nicht an der Wand anhaftet.

Erfindungsgemäß wird der Ablösegrad, das Volumen und/oder die Kenngröße anhand von Druckmessungen ermittelt. Hierbei ist ein Druckspeichervolumen vorgesehen, beispielsweise realisiert durch einen Druckspeicherbehälter oder Druckausgleichsbehälter. Dieser wird auf einen Soll-Druck gebracht und im Anschluss mit der Belüftungsseite verbunden, so dass ein Druckausgleich zwischen dem Druckspeichervolumen und der Belüftungsseite erfolgt. Der nach erfolgtem Druckausgleich resultierende Druck im Druckspeichervolumen bzw. der Belüftungsseite des Beutels wird als Kenngröße oder zur Ermittlung des Ablösegrads gemessen.

Vorzugsweise übersteigt der Soll-Druck den Druck auf der Entnahmeseite, so dass der Beutel durch den Druckausgleich verdrängt wird. Je mehr der Beutel zur Entnahmeseite verdrängt wurde (d. h. je mehr er kollabierte), umso geringer ist der belüftungsseitig gemessene Druck.

Es hat sich als vorteilhaft herausgestellt, wenn der Beutel nur noch in einem so geringen Umfang an der Wand des Behälters anhaftet, dass der Beutel zumindest im Wesentlichen vollständig kollabierbar ist, ohne dass das Kollabieren des Beutels ein weiteres Ablösen des Beutelmaterials von der Wand des Behälters bedarf. In diesem Fall kann der Aufbau eines Gegendrucks bei Entnahme von einem Produkt aus dem Beutel zumindest im Wesentlichen vollständig vermieden werden.

Hierbei ist es nicht zwingend erforderlich, dass das Beutelmaterial vollständig von der Wand des Behälters gelöst wird, da auch bei einem noch partiell anhaftenden Beutelmaterial eine ausreichende und/oder vollständige Kollabierung möglich ist. Unter einer vollständigen Kollabierung des Beutels wird in diesem Zusammenhang insbesondere die kleinstmögliche oder engstmögliche Zusammenfaltung des Beutels verstanden, wobei die Zusammenfaltbarkeit durch die Materialeigenschaften des Beutels begrenzt ist. Es ist bevorzugt, dass der Beutel vollständig kollabierbar ist, so dass die Belüftungsseite den durch die Wand des Behälters gebildeten Innenraum zumindest im Wesentlichen oder nahezu ganz ausfüllt (abzüglich des Volumens, welches das Beutelmaterial selbst einnimmt, und abzüglich des Volumens, das bedingt durch die kleinstmöglichen Biegeradien des Beutelmaterials auch bei vollständiger Kollabierung des Beutels noch zwischen den Falten des Beutelmaterials eingeschlossen ist).

Der von der Wand des Behälters zumindest teilweise abgelöste Beutel ist vorzugsweise so weit kollabierbar, dass der Innenraum des Behälters neben dem dann überwiegend durch die Belüftungsseite eingenommenen Volumen vorzugsweise nur noch das durch das Beutelmaterial und gegebenenfalls durch Entnahmeeinrichtungen eingenommene Volumens auf der Entnahmeseite lediglich wenige Prozent Totvolumen, beispielsweise weniger als 10%, vorzugsweise weniger als 5% oder 3%, des Gesamtvolumen des Behälters umfasst. Vorzugsweise wird dieses Totvolumen im Wesentlichen nur von dem Volumen gebildet, das bedingt durch die kleinstmöglichen Biegeradien des Beutelmaterials auch bei vollständiger Kollabierung des Beutels noch zwischen den Falten des Beutelmaterials eingeschlossen ist. Um einen entsprechenden Ablösegrad zu bestimmen oder zu verifizieren, hat sich das beschriebene Verfahren als besonders zuverlässig, genau und schnell erwiesen.

Mit dem oben beschriebenen Differenzdruckverfahren ist es möglich, in schonender Weise den Innenbeutel zu bilden bzw. von der Wand des Behälters abzulösen. Insgesamt können bei der Fertigung des Behälters Defekte wie Risse oder Undichtigkeiten, welche zu Leckagen zwischen Entnahmeseite und Belüftungsseite führen, nicht vollständig ausgeschlossen werden. Es hat sich als vorteilhaft erwiesen, solche Leckagen möglichst frühzeitig zu ermitteln, um Ausschuss bei bereits befüllten Behältern zu vermeiden.

In vorteilhafter Weise ist es möglich, das Verfahren zur Bildung bzw. Ablösung des Beutels mit dem erfindungsgemäßen Verfahren betreffend die Ermittlung eines Volumens, um das der Beutel kollabierbar ist, eines Ablösegrads des Beutels von der Innenwand des Behälters und/oder einer hierzu korrespondierenden Kenngröße zu kombinieren. Hierbei ist vorzugsweise vorgesehen, dass das erfindungsgemäße Verfahren auf ein Verfahren zur Bildung bzw. Ablösung des Beutels folgt. Es ist also vorzugsweise vorgesehen, dass zunächst eine Ablösung des Beutelmaterials bzw. Bildung des Beutels erfolgt und im Anschluss das Volumen, um das der Beutel kollabierbar ist, der Ablösegrad bzw. die hierzu korrespondierende Kenngröße bestimmt wird.

Es kann vorgesehen sein, dass bereits bei Ablösung des Beutelmaterials eine erste, bevorzugt grobe, Ermittlung des Ablösegrads und/oder einer Dichtigkeit des Beutels erfolgt. Hierzu kann eine Charakteristik, insbesondere Änderung, insbesondere über die Zeit, des Drucks auf oder des Differenzdrucks zwischen der Belüftungsseite und/oder der Entnahmeseite ermittelt und interpretiert werden. Beispielsweise kann eine grobe Undichtigkeit des Beutels dazu führen, dass der für einen Ablösevorgang angestrebte Differenzdruck aufgrund eines durch den Beutel oder an dem Beutelmaterial vorbei stattfindenden Druckausgleich nicht erreicht wird. Wenn auf diese Weise eine grobe Undichtigkeit bzw. ein Grobleck identifiziert wird, kann der Behälter aussortiert bzw. können weitere Verfahrensschritte verworfen werden.

Bevorzugt wird zusätzlich der Grad der Dichtigkeit des Beutels ermittelt. Hierbei wird zunächst die Entnahmeseite im Vergleich zur Belüftungsseite mit Überdruck beaufschlagt, so dass sich der Beutel an die Wand des Behälters anlegt. Ferner wird auf oder mit der Belüftungsseite ein abgeschlossenes Prüfvolumen erzeugt. In diesem Prüfvolumen wird nach einer oder in Abhängigkeit von einer Testdauer ein Druck oder eine Druckdifferenz ermittelt und dieser Druck oder diese Druckdifferenz wird als Indikator für den Grad der Dichtigkeit des Beutels verwendet.

Hierbei ist besonders bevorzugt, dass das Prüfvolumen zunächst ein Vakuum bzw. einen Unterduck im Vergleich zu einem Druck auf der Entnahmeseite und/oder im Vergleich zum Umgebungsdruck bzw. Normaldruck aufweist. Dieses Vakuum bzw. dieser Unterdruck kann durch Entnehmen, insbesondere Abpumpen, von Luft aus dem Prüfvolumen erzeugt werden. In diesem Zustand des Prüfvolumens wird eine erste Druckmessung durchgeführt. Bei oder nach der Testdauer wird dann mindestens eine zweite Druckmessung durchgeführt, um den Druck oder den Differenzdruck zu ermitteln.

Im Sinne der vorliegenden Erfindung wird vorzugsweise bereits ein absoluter Druck von weniger als 70 kPa, vorzugsweise weniger als 60 kPa, insbesondere weniger als 50 kPa als "Vakuum" bezeichnet. Bei dem Vakuum kann es sich insbesondere um ein Grobvakuum (absoluter Druck von 0,1 bis 30 kPa) handeln.

Als "Unterdruck" ist vorzugsweise ein Druck zu verstehen, der unterhalb des Umgebungsdrucks (Normaldruck oder 101,3 kPa) oder dem Druck eines anderen Bezugsvolumens liegt, vorzugsweise um mehr als 30 kPa, insbesondere mehr als 40 kPa. Bei dem Unterdruck kann es sich um einen absoluten Druck handeln, der an den Druckbereich eines Grobvakuums grenzt oder höchstens 40 kPa, 30 kPa oder 20 kPa über dem maximal als Grobvakuum bezeichneten Unterdruck von 30 kPa liegt.

Im konkreten Fall der Dichtigkeitsprüfung wird vorzugsweise ein Vakuum bzw. Unterdruck in dem Prüfvolumen erzeugt, das initial bzw. bei der ersten Messung vorzugweise einem Druck unterhalb des Umgebungsdrucks (Normaldruck oder 101,3 kPa) von mindestens 30 kPa, vorzugsweise mehr als 40 kPa oder 50 kPa und/oder weniger als 80 kPa, insbesondere weniger als 70 kPa unterhalb des Umgebungsdrucks (Normaldruck oder 101,3 kPa) entspricht. Der Absolute Druck in dem Prüfvolumen beträgt entsprechend vorzugsweise weniger als 70 kPa, vorzugsweise weniger als 60 kPa, insbesondere weniger als 50 kPa, und/oder mehr als 20 kPa, insbesondere mehr als 30 kPa.

Die Entnahmeseite kann über die Testdauer gegenüber der Belüftungsseite einen zumindest im Wesentlichen konstanten oder variablen Überdruck aufweisen. Es ist möglich, dass die Entnahmeseite belüftet ist, also mit der Umgebung derart verbunden ist, dass Umgebungsluft ein- und austreten kann. In diesem Fall entspricht die Druckdifferenz zwischen Belüftungsseite und Entnahmeseite betragsmäßig dem Unterdruck auf der Belüftungsseite. Besonders bevorzugt ist hingegen ein Überdruck auf der Entlüftungsseite gegenüber der Umgebung, beispielsweise von 150 kPa bis 250 kPa über Umgebungsdruck und/oder gegenüber der Belüftungsseite, beispielsweise von 200 kPa bis 300 kPa.

Das beschriebene Verfahren zur Dichtigkeitsprüfung hat den Vorteil, dass durch Anlegen des Beutels an die Wand des Behälters die Flexibilität bzw. Elastizität des Beutels das Messergebnis nicht beeinflusst und in Folge dessen ein Druckanstieg auf der entlüfteten bzw. evakuierten Belüftungsseite mit hoher Zuverlässigkeit zu einer Dichtigkeit korrespondiert und daher gut als Indikator für den Grad der Dichtigkeit verwendet werden kann. Außerdem schützt die Wand des Behälters das Beutelmaterial vor Überdehnung durch innen angelegten Überdruck.

Ferner hat die Messung des Unterdrucks auf der Belüftungsseite den Vorteil, dass niedrige Druckdruckdifferenzen mit verhältnismäßig geringem Aufwand sehr genau bestimmt werden können. Hierdurch wird eine zuverlässige Bestimmung des Grads der Dichtigkeit bei gleichzeitig verhältnismäßig geringem Aufwand ermöglicht.

Die Dichtigkeitsprüfung des Beutels kann in vorteilhafter Weise mit den zuvor erläuterten Aspekten kombiniert werden. Hierbei kann während des Ablösevorgangs und/oder der Ermittlung des Ablösegrads eine Prüfung auf Groblecks erfolgen und die Dichtigkeitsprüfung des Beutels erfolgt nur für den Fall, dass keine Groblecks detektiert worden sind. Alternativ oder zusätzlich erfolgt die Dichtigkeitsprüfung nur in dem Fall, dass ein ausreichender Ablösegrad ermittelt wurde, der Beutel ausreichend kollabierbar ist bzw. die hierzu korrespondierende Kenngröße in einem zuvor definierten Bereich bzw. Toleranzbereich liegt, der Behälter also nicht bereits bei den vorhergehenden Aspekten aussortiert worden ist.

Vorzugsweise weist der Behälter eine unrunde, vorzugsweis längliche, insbesondere schlitzartige Belüftungsöffnung auf. Vorzugsweise wird bei oder durch Einsetzen in eine (Test-) Kammer einer Anlage ein radialer Druck auf den Behälter ausgeübt, der derart auf die Belüftungsöffnung wirkt bzw. in Richtung einer Längsachse der unrunden Belüftungsöffnung wirkt, dass sich deren, insbesondere hydraulischer, Durchmesser und/oder Öffnungs-Querschnittsfläche vergrößert.

Grundsätzlich sind kleine hydraulische Durchmesser bzw. Öffnungsquerschnitte für eine Belüftungsöffnung bevorzugt, da hierdurch ein Gasaustausch und ggf. ein Entweichen von Stoffen verringert wird, die durch das Beutelmaterial diffundieren können. Für die Verfahren gemäß der vorliegenden Erfindung ist es jedoch vorteilhaft, den hydraulischen Durchmesser bzw. die Öffnungsquerschnittsfläche temporär zu vergrößern, da hierdurch ein reduzierter Flusswiderstand und folglich Zeitersparnis und Genauigkeitsverbesserungen erreicht werden können.

Um den (hydraulischen) Durchmesser bzw. die Öffnungs-Querschnittsfläche lediglich für eine gewisse Zeit bzw. reversibel vergrößern zu können, ist die Belüftungsöffnung länglich, was bei Beaufschlagung mit einem radialen bzw. seitlichen Druck auf den Behälter zu einem reversiblen, temporären Aufspreizen bzw. Ausstülpen unter Erweiterung des (hydraulischen) Durchmessers bzw. der Öffnungs-Querschnittsfläche führt. Insbesondere erfolgt ein Druck auf den Behälter jedenfalls in eine Richtung entlang einer schlitzartigen Belüftungsöffnung bzw. in Richtung der Längserstreckung der Belüftungsöffnung. Hierdurch wird der Behälter im Bereich der Belüftungsöffnung zusammengedrückt, was zu einem Auseinanderdrücken der bevorzugt schlitzartigen Belüftungsöffnung führt.

Ein weiterer, auch unabhängig realisierbarer Aspekt der vorliegenden Erfindung betrifft eine Anlage, die vorzugsweise zur Durchführung eines oder mehrerer der Verfahren der vorliegenden Erfindung ausgebildet ist. Die Anlage weist eine (Prüf-) Kammer auf, in die der Behälter derart einsetzbar oder eingesetzt ist, dass die Prüfkammer die Entnahmeseite und die Belüftungsseite getrennt voneinander dicht anbindet. Insbesondere weist die Prüfkammer mindestens zwei Zugänge und Dichtmittel auf, um die Entnahmeseite und die Belüftungsseite voneinander abgedichtet zugänglich zu machen.

Die Anlage kann dazu ausgebildet sein, zwischen der Entnahmeseite und der Belüftungsseite einen Differenzdruck zur Ablösung des Beutels von der inneren Wand des Behälters zu bewirken. Auf diese Weise kann ein an der Wand haftendes Beutelmaterial abgelöst und hierdurch ein Beutel gebildet werden, der anschließend vorzugsweise ohne einen, insbesondere dauerhaft und/oder dauerhaft angelegten, Differenzdruck kollabierbar ist. Insbesondere ist die Anlage dazu ausgebildet, das Verfahren gemäß dem ersten Aspekt der vorliegenden Erfindung durchzuführen.

Erfindungsgemäß weist die Anlage ein Druckspeichervolumen, insbesondere einen Druckausgleichsbehälter, auf und ist dazu ausgebildet, das Druckspeichervolumen auf einen (vorgebbaren) Druck zu bringen, der sich von dem Druck der Belüftungsseite unterscheidet. Weiter weist die Anlage ein Ventil auf, welches das Druckspeichervolumen mittels der Prüfkammer mit der Belüftungsseite verbindet, so dass ein Druckausgleich zwischen dem Druckspeichervolumen und der Belüftungsseite stattfinden kann. Dieses oder ein weiteres Ventil kann verwendet werden, um vor dem Druckausgleich das Druckspeichervolumen zu separieren, insbesondere von einer Druckquelle zu trennen. Weiter weist die Anlage einen Drucksensor auf, der zur Ermittlung einer Druckänderung bei oder nach Herstellung der Verbindung zwischen der Belüftungsseite und dem Druckspeichervolumen ausgebildet ist. Hierzu kann der Drucksensor am Druckspeichervolumen, an der belüftungsseitigen Prüfkammer oder dazwischen vorgesehen oder angebunden sein. Hierdurch kann schnell und zuverlässig ein ausreichender Ablösegrad verifiziert werden. Ferner ist es möglich, ein Grobleck zu detektieren, wenn mittels des Drucksensors ein Druckabfall ermittelt wird, der einen Grenzwert überschreitet.

Erfindungsgemäß ist die Anlage dazu ausgebildet, das Verfahren gemäß dem ersten Aspekt der vorliegenden Erfindung durchzuführen. Hierbei kann ferner vorgesehen sein, dass die Anlage dazu ausgebildet ist, sowohl das Verfahren zur Bildung bzw. Ablösung des Beutels als auch das erfindungsgemäße Verfahren insbesondere in dieser Reihenfolge, durchzuführen.

Vorzugsweise ist die Anlage zusätzlich zur Bestimmung des Grads der Dichtigkeit bzw. Dichtigkeitsprüfung oder Leckageprüfung von in Behältern vorgesehenen Beuteln ausgebildet, wobei ein Differenzdruck zwischen der Entnahmeseite und der Belüftungsseite aufgebaut werden kann und die Anlage einen Drucksensor und eine mit dem Drucksensor verbundene Auswerteeinrichtung aufweist. Die Auswerteeinrichtung ist dabei dazu ausgebildet, eine Änderung des Differenzdrucks zu messen und diese Änderung mit einem Schwellwert zu vergleichen.

Vorzugsweise kann die Anlage bei oder durch Erreichen, Überschreiten oder Unterschreiten des Schwellwerts eine Dichtigkeit, Undichtigkeit, Leckage oder deren Grad detektieren, und, vorzugsweise, ggf. ein Verwerfen des Behälters zu initiieren. Insbesondere ist die Anlage dazu ausgebildet, zur Bestimmung des Grads der Dichtigkeit bzw. zur Dichtigkeitsprüfung oder Leckageprüfung auf der Entnahmeseite einen Unterdruck verglichen auf der Belüftungsseite einen Unterdruck im Vergleich zur Entnahmeseite und/oder zur Umgebung zu erzeugen. Weiter ist bevorzugt, dass die Anlage dazu ausgebildet ist, auf der Entnahmeseite einen Überdruck gegenüber der Belüftungsseite und/oder der Umgebung zu erzeugen. Auf diese Weise kann mit der Anlage ein Differenzdruck erzeugt werden. Im Anschluss daran wird vorzugsweise nach oder über einer Zeitspanne eine Druckänderung auf der Belüftungsseite durch die Anlage ermittelt und auf dieser Basis die Dichtigkeit geprüft bzw. der Grad der Dichtigkeit bestimmt.

Insbesondere ist die Anlage dazu ausgebildet, eine Dichtigkeitsprüfung bzw. Leckageprüfung durchzuführen. Weiter kann die Anlage dazu ausgebildet sein, das erfindungsgemäße Verfahren und das Verfahren zur Dichtigkeitsprüfung, oder besonders bevorzugt das Verfahren zur Bildung bzw. Ablösung des Beutels, das erfindungsgemäße Verfahren und das Verfahren zur Dichtigkeitsprüfung durchzuführen insbesondere in dieser Reihenfolge. Hierdurch werden einerseits entsprechende Vorteile erreicht. Andererseits kann durch Kombinieren von unterschiedlichen Schritten in derselben Anlage eine Zeitersparnis erreicht und eine Komplexität der Anlage reduziert werden. Alternativ ist es jedoch auch möglich, dass unterschiedliche Verfahren oder Verfahrensschritte in unterschiedlichen Anlagen bzw. Kammern erfolgen. Hierzu kann die Anlage auch zwei oder mehr Kammern aufweisen.

Zur Druckmessung kann grundsätzlich derselbe Drucksensor verwendet werden, der bereits für die Bestimmung des Ablösegrads verwendet wird. Der Drucksensor kann also mit der Belüftungsseite verbunden sein.

Ferner ist bevorzugt, dass die Anlage zur Evakuierung bzw. Druckabsenkung auf der Belüftungsseite eine Vakuumpumpe aufweist. Alternativ oder zusätzlich weist die Anlage eine Druckpumpe, Druckluftquelle oder sonstige Einrichtung zur Erzeugung eines Überdrucks auf der Entnahmeseite auf.

Bei einer Druckdifferenz, die durch einen an der Entnahmeseite angelegten Überdruck erzeugt wird, legt sich der Beutel an die Behälterwand an. Infolge dessen kann sichergestellt werden, dass eine später detektierte Änderung des (Unter-) Drucks auf der Belüftungsseite mit einer Durchlässigkeit des Beutels in Verbindung steht. Insbesondere wird folglich sichergestellt, dass das Ergebnis, also die späte detektierte Änderung des (Unter-)Drucks nicht durch Volumenschwankungen wie durch zusätzliches Aufblähen des Beutels beeinflusst werden. Ferner hat sich als besonders schnell und genau die Beobachtung des (Unter-)Drucks auf der Belüftungsseite erwiesen, da hierdurch bereits geringe Druckanstiege sicher detektiert und zur Erkennung einer Leckage verwendet werden können. Als besonders vorteilhaft hat sich ein (Grob-)Vakuum oder Unterdruck zur genauen Ermittlung erwiesen, da hierbei auftretende Druckschwankungen sehr genau ermittelt und folglich auch geringfügige Leckagen des Beutels sicher detektiert werden können.

Vorzugsweise weist die Anlage eine (Prüf-) Kammer für den oder mit dem Behälter auf, wobei die Kammer, insbesondere durch einen sich verjüngenden Durchmesser, dazu ausgebildet ist, durch, bei oder nach Einsetzen des Behälters in die Kammer einen radialen Druck auf die Wand des Behälters zu bewirken, so dass der hydraulische Querschnitt der Belüftungsöffnung vergrößerbar ist. Durch den vergrößerten Durchmesser bzw. die Öffnungsquerschnittsfläche kann ein Druckausgleich durch die Belüftungsöffnung hindurch beschleunigt werden. In Folge dessen kann eine Ablösung des Beutelmaterials verbessert bzw. beschleunigt werden und/oder Messungen auf der Belüftungsseite können beschleunigt bzw. in ihrer Genauigkeit verbessert werden.

Wie bereits zuvor beschrieben ist es vorteilhaft, das Beutelmaterial vor Einfüllen des Produkts von der Wand abzulösen, damit die Erzeugung eines Gegendrucks (bedingt durch das Anhaften des Beutels an der Wand) bei Entnahme des Produkts vermieden wird. Es hat sich jedoch ferner gezeigt, dass es vorteilhaft ist, wenn das Beutelmaterial noch zu einem gewissen Grad, und zwar entlang der Haupterstreckungsrichtung an der Innenwand des Behälters anhaftet, da hierdurch eine gezielte Kollabierungsrichtung des Beutels und folglich eine zumindest im Wesentlichen vollständige Entnahmefähigkeit des Produkts erreicht werden kann.

In vorteilhafter Weise kann durch die Anhaftung des Beutels längs an der Innenwand des Behälters erreicht werden, dass der Beutel sich beim Kollabieren zumindest im Wesentlichen seitlich über die Fläche eines Ansaugelements wie einen Dorn oder ein Tauchrohr faltet, ohne dessen stirnseitige Ansaugöffnung zu blockieren. Hierdurch wird ein verringertes Restvolumen ermöglicht und/oder eine verbesserte Zuverlässigkeit erreicht.

Ein weiterer Aspekt der vorliegenden Erfindung betrifft ein Computerprogrammprodukt aufweisend Programmcodemittel, die, wenn sie ausgeführt werden, ein Verfahren gemäß der vorliegenden Erfindung ausführen, insbesondere mit der vorschlagemäßen Anlage. Bei dem Computerprogrammprodukt kann es sich um ein computerlesbares Speichermedium und/oder eine Steuereinrichtung handeln, die durch Druckregelung und/oder Ventilsteuerung eine sukzessive Ablösung des Beutelmaterials bewirkt, eine Ermittlung des Ablösegrads des Beutels mittels eines Drucksensors und der Auswertung der Drucksensordaten ermöglicht und/oder die Verifikation einer Dichtigkeit durch Auswertung eines zeitlichen Verlaufs von Drucksensordaten ermöglicht.

Ein weiterer Aspekt der vorliegenden Erfindung betrifft die Verwendung einer erfindungsgemäßen Anlage zur Erzeugung eines Beutels in einem Behälter durch Ablösen des Beutelmaterials und/oder zur Prüfung des Behälters mit dem erfindungsgemäßen Verfahren. Weitere Aspekte und Vorteile der vorliegenden Erfindung ergeben sich aus den Ansprüchen und aus der folgenden Beschreibung eines bevorzugten Ausführungsbeispiels anhand der Zeichnung.

### In der Zeichnung zeigt:

- Fig. 1: einen schematischen Querschnitt einer nicht erfindungsgemäßen Anlage zur Ablösung des Beutelmaterials;
- Fig. 2: schematische Druckverlauf-Diagramme im Verfahren zur Ablösung des Beutelmaterials;
- Fig. 3: ein Blockschaltbild betreffend den Ablösevorgang;
- Fig. 4: einen schematischen Querschnitt einer erfindungsgemäßen Anlage zur Ablösegradbestimmung;
- Fig. 5: einen schematischen Querschnitt der Prüfkammer gemäß Schnittlinie V-V aus Fig. 4;
- Fig. 6: ein schematisches Blockdiagram betreffend die Ablösegradbestimmung;
- Fig. 7: ein schematisches Blockdiagram betreffend die Dichtigkeitsprüfung;
- Fig. 8: ein schematisches Druckverlaufs-Diagramm im Verfahren der Dichtigkeitsprüfung; und
- Fig. 9: einen Schnitt des Behälters im Bereich der Belüftungsöffnung.

In den Figuren werden die selben Bezugszeichen für gleiche oder ähnliche Teile verwendet, wobei entsprechende Teile zueinander korrespondieren können und/oder entsprechende Eigenschaften und Vorteile erreicht werden können, auch wenn von einer wiederholten Beschreibung abgesehen wird.

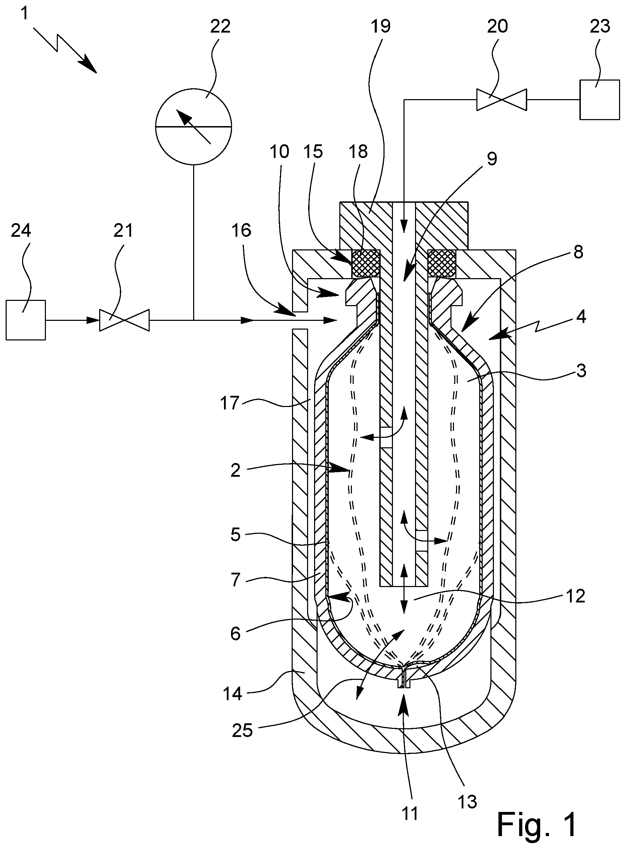

Fig. 1 zeigt den schematischen Querschnitt einer Anlage 1 zur Bildung eines Beutels 2 im Innenraum 3 eines Behälters 4 bzw. zur Funktionssicherung der Kollabierbarkeit des Beutels 2 im Innenraum des Behälters 4.

Der Behälter 4 weist einen Außenbehälter 8 auf, der die Wand 7 aufweist oder hierdurch gebildet ist. Der Außenbehälter 8 bzw. die Wand 7 ist/sind vorzugsweise zumindest im Wesentlichen formstabil bzw. formsteif, kann bzw. können jedoch durch eine Kraft vorzugsweise elastisch und/oder reversibel verformt werden. Der Außenbehälter 8 gibt dem Behälter 4 seine Form und definiert seine Öffnungen.

Insbesondere haftet das Beutelmaterial 5 zunächst an einer Innenseite 6 der Wand 7 des Behälters 4 an.

Das Beutelmaterial 5 kleidet den Außenbehälter 8 bzw. die Wand 7 vorzugsweise innenseitig zumindest im Wesentlichen aus. Dies kann insbesondere dadurch erreicht werden, dass der Behälter 4 mit aneinander anliegenden Schichten aus Beutelmaterial 5 und Material der Wand 7 hergestellt wird. Hierzu werden das Beutelmaterial 5 und die Wand 7 insbesondere zunächst zu zwei koaxialen Schläuchen geformt, insbesondere koextrudiert, woraufhin dem Behälter 4, vorzugsweise mittels eines Blasverfahrens, seine Form verliehen wird.

Das Beutelmaterial 5 und die Wand 7 gehen vorzugsweise keine permanente, unlösbare oder nur unter Zerstörung lösbare Verbindung, insbesondere keine chemische Verbindung, miteinander ein. Vielmehr liegen und/oder haften diese vorzugsweise voneinander (insbesondere zerstörungsfrei) lösbar bzw. trennbar oder adhäsiv unmittelbar aneinander an.

Im vorliegenden Fall werden Materialpaarungen bevorzugt, die bei unmittelbarem Kontakt zerstörungsfrei lösbar adhäsiv an einander haften. Dies kann erreicht werden, indem die Materialpaarung des Beutelmaterials 5 und des die Wand 7 bildenden Materials so ausgewählt sind, dass diese Materialien bei der Extrusion keine Mischung bilden oder sich bei Erkalten entmischen. Vorzugsweise handelt es sich bei dem Beutelmaterial 5 und bei dem die Wand 7 bildenden Material um unterschiedliche Thermoplasten, insbesondere unterschiedliche Polyolefine, wie die Materialpaarung PE/PP. Es ist bevorzugt, dass sich die Materialen in ihren Schmelzpunkten unterscheiden, vorzugsweise um mehr als 30 °C, insbesondere mehr als 40 °C oder 50 °C. Es ist bevorzugt, dass die Materialien eine geringe Mischentropie aufweisen, vorzugsweise so dass sie sich, beispielsweise bei unter 100 °C, entmischen. Alternativ oder zusätzlich kann die Eigenadhäsion der jeweiligen Materialien größer sein als die Adhäsion zu einander sein. Die Schälkraft der unmittelbar aneinander angrenzenden Materialien beträgt vorzugsweise weniger als 8 N/100mm, insbesondere weniger als 5 N/100mm.

Ein weiteres Kriterium für die Auswahl einer geeigneten Materialpaarung ist, dass der huggins'sche Wechselwirkungsparameter χ der Materialpaarung (in der Schmelze) geringer ist als der kritische huggins'sche Wechselwirkungsparameter χ_{C}, vorzugsweise um mindestens Faktor 2, 5 oder 10. Der huggins'sche Wechselwirkungsparameter χ beschreibt hierbei auf Basis der Flory-Huggins-Theorie das Haftverhalten aneinander anliegender Polymere.

Alternativ oder zusätzlich können jedoch auch Trennmittel bei der Extrusion zwischen dem Beutelmaterial 5 und dem die Wand 7 bildenden Material eingesetzt werden oder sonstige Maßnahmen getroffen werden, um ein nachträgliches Ablösen des Beutelmaterials 5 von der Wand 7 zu ermöglichen.

Der Behälter 4 weist eine Entnahmeöffnung 9 zur Entnahme eines innerhalb des Beutels 2 anordenbaren Produkts auf. Insbesondere ist die Entnahmeöffnung 9 durch einen Halsbereich 10 des Behälters 4 gebildet. Der Halsbereich 10 kann einen Kragen zur Anbringung eines Verschlusses oder Adapters, insbesondere mittels einer Quetsch- oder Pressverbindung, aufweisen. Die Entnahmeöffnung 9 ermöglicht den Zugang zur Innenseite des Beutels 2 bzw. des durch das Beutelmaterial 5 umschlossenen Volumens. Im Bereich der Entnahmeöffnung liegt das Beutelmaterial 5 an der Wand 7 vorzugsweise dauerhaft dichtend an. Dies kann durch Verquetschen oder Verpressen erreicht werden.

Der Behälter 4 weist weiter eine Belüftungsöffnung 11 auf. Diese ist im Darstellungsbeispiel auf einer der Entnahmeöffnung 9 abgewandten oder gegenüberliegenden Seite des Behälters 4 in dem Außenbehälter 8 bzw. dessen Wand 7 vorgesehen, kann grundsätzlich jedoch auch an einer anderen Stelle vorgesehen sein. Die Belüftungsöffnung 11 ermöglicht den Zugang zum Innenraum 3 des Behälters 4 auf der Außenseite bzw. der der Entnahmeseite 12 abgewandten Seite des Beutels 2.

Vorzugsweise ist die Erzeugung der Belüftungsöffnung 11 ein Schritt des Fertigungsverfahrens des Behälters 4, insbesondere wobei dieser Schritt nach dem Abformschritt im Fertigungsverfahren und vor einem Schritt zur (zumindest teilweise) Ablösung des Beutelmaterials 5 von der Wand 7 stattfindet. Vorzugsweise wird der Behälter 4 aus den koaxial angeordneten und/oder koextrudierten, ineinander liegenden Schläuchen mit Hilfe einer vorzugsweise zweiteiligen Form oder Blasform abgeformt. Besonders bevorzugt werden dabei Teile der Form oder Blasform über den Schläuchen derart geschlossen, dass die Schläuche an mindestens einer Stelle zusammen gequetscht werden. Vorzugsweise wird dabei eine nach außen hervorstehende Naht oder Bodennaht ausgebildet, so dass das innenliegende Beutelmaterial 5 miteinander verschweißt bzw. an dieser Stelle aus dem innenliegenden Schlauch ein Beutelverschluss gebildet wird. Auf diese Weise kann aus dem zunächst schlauchartigen Beutelmaterial 5 ein lediglich an der Entnahmeöffnung 9 geöffnetes, vom Beutelmaterial 5 umschlossenes Volumen gebildet werden. Vorzugsweise wird die Belüftungsöffnung 11 im Bereich der Naht oder Bodennaht ausgebildet.

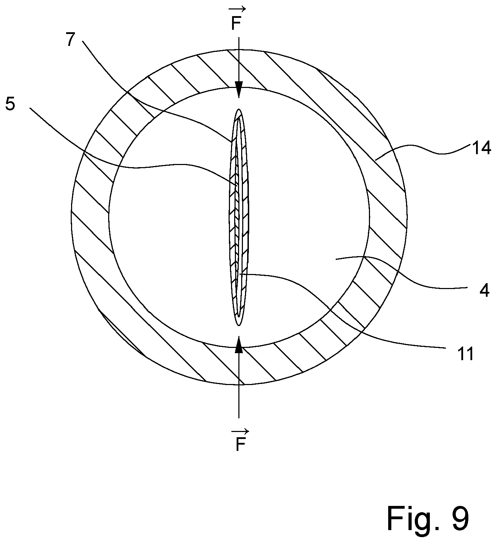

Vorzugsweise wird die Belüftungsöffnung 11 dadurch gebildet, dass die Bodennaht im Anschluss an die Formgebung mindestens teilweise, bevorzugt jedoch nicht vollständig, abgeschnitten wird, so dass wenigstens ein Teilbereich der Naht des Beutels 2 in der Naht der Wand 7 des Behälters 4 fixiert bleibt. Anschließend wird eine radiale, in Nahtrichtung wirkende Kraft im Bodenbereich eingeleitet, so dass die Bodennaht aufbricht. Hierbei ist bevorzugt, dass die Temperatur des Mittels der Blasform hergestellten Formlings beim Abschneiden der Bodennaht zwischen 40° und 70° liegt und der Außenbehälter noch in gewissem Umfang plastisch verformbar ist, so dass die durch die Kraft verursachte Verformung eine bleibende Verformung ist und nicht durch elastische Rückstellung vollständig aufgehoben wird. Das Resultat ist eine aufgebrochene Bodennaht, bei der zwischen dem Beutelmaterial 5 und der Wand 7 die Belüftungsöffnung 11 gebildet ist, wie beispielhaft in Fig. 9 dargestellt.

An der Belüftungsöffnung 11 ist die Wand 7 vorzugsweise von dem Beutelmaterial 5 lösbar oder gelöst und untereinander nicht verbunden, so dass Umgebungsluft zwischen das Beutelmaterial 5 und die Wand 7 dringen kann. Dies ermöglicht unter Ablösung des Beutelmaterials 5 von der Innenseite 6 der Wand 7 einen Druckausgleich. Für Details hinsichtlich der Herstellung der Belüftungsöffnung 11 wird auf die Lehre der WO 01/76849 verwiesen.

Der Innenraum des Behälters 4 weist eine der Entnahmeöffnung 9 zugeordnete Entnahmeseite 12 und eine der Belüftungsöffnung 11 zugeordnete Belüftungsseite 13 auf, die durch das Beutelmaterial 5 voneinander getrennt sind. Die Entnahmeseite 12 ist also vorzugsweise innerhalb des Beutels oder die Innenseite des Beutels 2 bzw. des durch das Beutelmaterial 5 gebildeten Volumens oder ist hiermit verbunden, während die Belüftungsseite 13 außerhalb des Beutels 2 bzw. des Beutelmaterials 5 bzw. zwischen Beutelmaterial 5 und Wand 7 vorgesehen ist.

Im Darstellungsbeispiel gemäß Fig. 1 ist der Behälter 4 in einer Kammer 14 angeordnet. Die Kammer 14 weist einen Entnahmeöffnungsanschluss 15 auf, über den die Innenseite des Beutels 2 bzw. das durch das Beutelmaterial 5 gebildete Volumen anschließbar ist. Auf diese Weise kann beispielsweise Druckluft eingeleitet oder der Innenraum des Beutels 2 bzw. des durch das Beutelmaterial 5 gebildete Volumens evakuiert werden o. dgl. Insbesondere handelt es sich also um einen fluidischen Anschluss. Der Entnahmeöffnungsanschluss 15 bildet vorzugsweise einen Teil der Entnahmeseite 12, ist dieser zugeordnet oder ermöglicht eine Verbindung mit dieser.

Ferner weist die Kammer 15 vorzugsweise einen Belüftungsöffnungsanschluss 16 auf, der vorzugsweise, insbesondere fluidisch, mit der Belüftungsöffnung 11 kommuniziert. Im Darstellungsbeispiel erfolgt dies über einen Wanddurchbruch in Kombination mit seitlich entlang des Behälters 4 geführten Verbindungskanälen 17. Der Belüftungsöffnungsanschluss 16 kann jedoch auch auf andere Weise fluidisch mit der Belüftungsöffnung 11 verbunden sein. Der Belüftungsöffnungsanschluss 16 ist vorzugsweise mit der Belüftungsseite 13 verbunden oder bildet einen Teil dieser. Über den Entnahmeöffnungsanschluss 15 kann die Innenseite des Beutels 2 bzw. des durch das Beutelmaterial 5 gebildeten Volumens mit Über- bzw. Unterdruck beaufschlagt werden. Über den Belüftungsöffnungsanschluss 16 kann die Belüftungsseite mit Überdruck oder Unterdruck beaufschlagt werden. Mit anderen Worten ermöglicht der Entnahmeöffnungsanschluss 15 eine Verbindung mit der Entnahmeseite 12 und der Belüftungsöffnungsanschluss 16 eine Verbindung mit der Belüftungsseite 13, vorzugsweise um Druckdifferenzen zwischen der Entnahmeseite 12 und der Belüftungsseite 13 zu erzeugen.

Die Kammer 14 ist dazu ausgebildet, mit dem Behälter 4 zwei fluidisch voneinander getrennte Bereiche zu bilden, nämlich einen entnahmeseitigen fluidischen Bereich, der fluidisch mit der Entnahmeseite 12 verbunden ist und einen belüftungsseitigen fluidischen Bereich, der fluidisch mit der Belüftungsseite 13 verbunden ist. Diese Bereiche bilden vorzugsweise durch den Beutel 2 bzw. das Beutelmaterial 5 voneinander getrennte Druckbereiche bzw. Druckkreisläufe. Die Anlage 1 weist vorzugsweise Mittel auf, um die Bereiche mit einem vorgegebenen oder vorgebbaren Druck beaufschlagen zu können und/oder zum Druckausgleich mit der Umgebung verbinden zu können. Dies kann durch Pumpen, Ventile und/oder Druckspeicher realisiert sein.

Der Behälter 4 ist in der Kammer 14 derart abgedichtet eingesetzt dass die Entnahmeseite 12 von der Belüftungsseite 13 bzw. der Entnahmeöffnungsanschluss 15 von dem Belüftungsöffnungsanschluss 16 bei korrekt ausgebildetem Beutel 2 fluidisch getrennt sind, insbesondere luftdicht oder gasdicht. Hierzu kann eine Dichtung 18 vorgesehen sein, welche den entnahmeseitigen fluidischen Bereich gegenüber dem belüftungsseitigen fluidischen Bereich, insbesondere luftdicht oder gasdicht, abdichtend. Eine solche Dichtung 18 dichtet im Darstellungsbeispiel exemplarisch stirnseitig den Halsbereich 10 des Behälters 4 bzw. den Behälter 4 am Rand der Entnahmeöffnung 9 gegen ein Gehäuse der Kammer 14 ab. Ferner weist die Anlage 1 vorzugsweise einen tauchrohrartigen Dorn 19 auf, der (entnahmeseitig) in den Beutel 2 bzw. das durch das Beutelmaterial 5 gebildete Volumen eintaucht. Der Dorn hat stirnseitige und/oder seitliche Öffnungen zum Einleiten bzw. Ausleiten von Substanzen, insbesondere Gas oder Druckluft.

Im Darstellungsbeispiel aus Fig. 1 weist die Anlage 1 ferner ein entnahmeseitiges Ventil 20 auf, mit dem ein Zufluss in den Beutel 2 bzw. ein Abfluss aus dem Beutel 2 freigegeben und/oder blockiert werden kann. Der Belüftungsinnenraum bzw. die Entnahmeseite 12 kann somit belüftet werden und/oder auf einen Druck gebracht und/oder (luftdicht) verschlossen werden.

Weiter weist die Anlage 1 erfindungsgemäß ein belüftungsseitiges Ventil 21 auf, durch das ein Zufluss oder Abfluss auf der Belüftungsseite 13 ermöglicht oder blockiert werden kann. Hierdurch kann die Außenseite des Beutels 2 bzw. die Belüftungsseite 13 belüftet und/oder auf einen Druck gebracht und/oder (luftdicht) verschlossen werden.

Mit der Belüftungsseite 13 ist vorzugsweise ein Drucksensor 22 verbunden. Der Drucksensor 22 ist vorzugsweise dazu ausgebildet und eingerichtet, einen belüftungsseitigen Druck, insbesondere Luftdruck oder Gasdruck, zu messen. Im Darstellungsbeispiel ist der Drucksensor 22 unmittelbar fluidisch mit der Belüftungsseite 13 verbunden. Hier sind jedoch auch andere Lösungen denkbar.

Ein Beutel 2 im Sinne der vorliegenden Erfindung ist vorzugsweise ein flexibles, besonders bevorzugt kollabierbares Gebilde.

Der Beutel 2 ist vorzugsweise aus Beutelmaterial 5 gebildet. Das Beutelmaterial 5 ist vorzugsweise folienartig.

Das Beutelmaterial 5 ist in einem Ausgangszustand an der Innenseite 6 der Wand 7, insbesondere durch Adhäsion, gehalten. Daher wird von einem Beutel 2 in der Regel erst dann gesprochen, wenn das Beutelmaterial 5 von der Innenseite 6 der Wand 7 abgelöst ist, so dass es sich frei von der Wand 7 entfernen kann. Dies ist der Fall, sobald das Beutelmaterial 5 erstmalig von der Innenseite 6 der Wand 7 gelöst worden ist, da hierdurch die Adhäsion zwischen Wand 7 und Beutelmaterial 5 aufgehoben wird.

Die Anlage 1 weist vorzugsweise eine mit der Entnahmeseite 12 verbindbare Druckeinrichtung 23 und/oder eine mit der Belüftungsseite 13 verbindbare Druckeinrichtung 24 auf. Die Druckeinrichtungen 23, 24 können dazu ausgebildet sein, einen Druck zu ändern, insbesondere zu steigern oder abzusenken. Insbesondere handelt es sich hierbei um einen Luftdruck oder Gasdruck. Die Druckeinrichtunaen 23, 24 können also beispielsweise Druckluftquellen sein oder aufweisen. Alternativ oder zusätzlich können die Druckeinrichtungen 23, 24 Vakuumpumpen sein oder aufweisen. Auf diese Weise ermöglichen es die Druckeinrichtungen 23, 24, Druckdifferenzen zwischen der Entnahmeseite 12 und der Belüftungsseite 13 zu erzeugen und/oder zu verändern.

Zur Ablösung des Beutelmaterials 5 wird ein Differenzdruck 25 zwischen der Belüftungsseite 13 und der Entnahmeseite 12 erzeugt und alternierend verändert, so dass sich das an der Innenseite 6 der Wand 7 des Behälters 4 bzw. Außenbehälters 8 anhaftende Beutelmaterial 5 sukzessive löst und hierdurch den Beutel 2 bildet. Insbesondere wird bei der alternierenden Veränderung des Differenzdrucks 25 abwechselnd entnahmeseitig (a) ein Überdruck und Normaldruck oder (b) ein Überdruck und ein Unterdruck oder (c) ein Unterdruck und Normaldruck eingestellt. Vorzugsweise wird ein Zyklus 28 für den eingestellten Druck vorgegeben, wobei im Ablöseverfahren insbesondere mehrere Zyklen 28 hintereinander ablaufen.

In Fig. 1 sind zusätzlich zu dem an der Wand 7, insbesondere adhäsiv, angelagerte Beutelmaterial 5 teil-abgelöste Varianten des Beutelmaterials 5 gestrichelt dargestellt, wobei die Varianten unterschiedliche Situationen im Verlauf des Ablösevorgangs wiedergeben bzw. im Verfahren nach unterschiedlich vielen Zyklen 28 entstehen. Die schematisch dargestellten Varianten der Form des Beutelmaterials 5 stehen hier gewissermaßen für unterschiedliche Ablösestadien im Ablöseverfahren, insbesondere im Anschluss an Ablösevorgänge bzw. Zyklen 28 (wobei sich in der Darstellung das Beutelmaterial 5 während der Ablösung von außen nach innen verschiebt).

Es ist vorgesehen, dass zunächst ein Differenzdruck 25 erzeugt wird, bei dem ein Überdruck auf der Belüftungsseite 13 gegenüber der Entnahmeseite 12 vorliegt, wodurch das Beutelmaterial 2 zunächst teilweise von der Wand 7 gelöst wird. Im Anschluss wird der Differenzdruck 25 vorzeichenmäßig bzw. bezüglich der Richtung des Differenzdrucks 25 umgekehrt, wodurch sich das bereits abgelöste Beutelmaterial 5 wieder an die Wand 7 anlegt. Hierdurch kann ein erster Zyklus 28 vollständig oder teilweise gebildet sein.

In einem nächsten Schritt wird erneut ein Differenzdruck 25 erzeugt, bei dem der Druck auf der Belüftungsseite 13 größer ist als auf der Entnahmeseite 12. Hierdurch bewegt sich das Beutelmaterial 5 zunächst im bereits abgelösten Abschnitt von der Wand 7 weg und löst im Folgenden einen weiteren Abschnitt des Beutelmaterials 5 von der Wand 7. Optional kann erneut der Differenzdruck 25 vorzeichenmäßig bzw. bezüglich der Richtung des Differenzdrucks 25 umgekehrt werden. Durch den resultierenden Überdrück auf der Entnahmeseite 12 gegenüber der Belüftungsseite 13 kann das abgelöste Beutelmaterial 5 wieder an die Wand 7 angelegt werden. Hierdurch kann ein zweiter Zyklus 28 vollständig oder teilweise gebildet sein.

Der Differenzdruck 25 und/oder dessen Verlauf gleicht oder ähnelt bei diesem zweiten oder folgenden weiteren Zyklen 28 vorzugsweise dem aus dem ersten Zyklus 28 zumindest im Wesentlichen, kann aber alternativ jedenfalls bezüglich der absoluten Differenzdruckwerte und/oder der Zeitspannen der Beaufschlagung mit Differenzdruck hiervon abweichen.

Mit einer solchen zyklischen Differenzdruck-Beaufschlagung wird das Beutelmaterial 5 schonend von der Innenseite 6 des Wand 7 sukzessive gelöst und bildet dann den flexiblen, kollabierbaren Beutel 2 zur Aufnahme eines Produkts.

Der Differenzdruck 25 wird vorzugsweise zwischen Null bzw. einem Nulldurchgang vor einer Umkehr des Differenzdrucks 25 und einem maximalen Differenzdruck 25 variiert. Der maximale Differenzdruck 25, insbesondere Überdruck auf der Belüftungsseite 13 gegenüber der Entnahmeseite 12, liegt vorzugsweise bei mehr als 100 kPa, insbesondere mehr als 150 kPa, und/oder weniger als 400 kPa, insbesondere weniger als 300 kPa. Hierdurch kann eine effiziente Ablösung bei gleichzeitiger Schonung des Beutelmaterials 5 erreicht werden.

In einem Beispiel wird zur Erzeugung des Differenzdrucks 25 auf einer Seite (insbesondere der Entnahmeseite 12) ein Unterdruck bzw. Vakuum und auf der anderen Seite (insbesondere der Belüftungsseite 13) ein Überdruck (insbesondere verglichen mit einem Normal- oder Umgebungsdruck und/oder Druck auf der Entnahmeseite 12) hergestellt. Weiter können die Druckverhältnisse zur Bildung des Zyklus 28 alterniert bzw. umgekehrt oder invertiert werden, vorzugsweise bezogen auf das Vorzeichen des Differenzdrucks 25.

Ein Vakuum bzw. Unterdruck im Sinne der vorliegenden Erfindung entspricht vorzugweise einem Unterdruck in Hinblick auf Umgebungsdruck von mindestens 30 kPa, vorzugsweise mehr als 40 kPa oder 50 kPa und/oder weniger als 80 kPa, insbesondere weniger als 70 kPa. Der Absolute Druck beträgt dann also noch etwa 20 bis 60 kPa. Der Überdruck auf der anderen Seite ergibt sich dann, beispielsweise zu 150 kPa bis 250 kPa.

Ein Ablösezyklus, im Folgenden Zyklus 28 genannt, weist vorzugsweise (genau) eine Phase eines positiven und/oder (genau) eines negativen Differenzdrucks 25 zwischen der Entnahmeseite 12 und der Belüftungsseite 13 auf, wobei im Sinne der vorliegenden Erfindung ein positiver Differenzdruck vorliegt, wenn der Druck auf der Belüftungsseite 13 größer ist als auf der Entnahmeseite 12. Ein negativer Differenzdruck liegt folglich dann vor, wenn der Druck auf der Belüftungsseite 13 geringer ist als auf der Entnahmeseite 12. Ein negativer Differenzdruck ist dazu geeignet, den Beutel 2 bzw. das Beutelmaterial 5 an die Wand 7 oder in Richtung der Wand 7 zu drücken, während der positive Differenzdruck in die entgegengesetzte Richtung auf das Beutelmaterial 5 bzw. in den Beutel 2 wirkt, so dass das Beutelmaterial 5 von der Wand 7 abgelöst wird und/oder der Beutel 2 in Richtung der Mitte des Behälters 4 bewegt oder gedrückt wird.

Für eine schonende Ablösung und folglich einen geringen Ausschuss bei der Herstellung von Behältern 4 hat sich ein Ablösevorgang bestehend aus mindestens zwei Zyklen 28, vorzugsweise mindestens drei Zyklen 28 und/oder weniger als zehn Zyklen 28, vorzugsweise weniger als acht Zyklen 28, insbesondere weniger als sechs Zyklen 28 als vorteilhaft herausgestellt. Um mit weniger Zyklen 28 einen ausreichenden Ablösegrad zu erreichen, werden zu hohe Differenzdrücke 25 benötigt, die das Risiko einer Schädigung des Behälters 4 bzw. des Beutels 2 erhöhen. Bei Verwendung zu vieler Zyklen 28 leidet das Beutelmaterial 5. Als besonders vorteilhaft hat sich die Verwendung von drei bis vier Zyklen 28 ergeben.

Es sind vorzugsweise mehrere gleiche oder jedenfalls ähnliche Zyklen 28 vorgesehen. Dies hat sich insbesondere aus dem Grund als vorteilhaft erwiesen, dass - insbesondere abhängig von der Materialpaarung des die Wand 7 bildenden Materials und des Beutelmaterials 5 - jedenfalls für den maximalen positiven Differenzdruck ein Optimalwert oder optimaler Bereich ermittelt werden kann, bei dem die Ablösung möglichst schnell und gleichzeitig noch schonend erfolgt. Entsprechende Differenzdruckmaxima und/oder Verläufe werden daher in den unterschiedlichen Zyklen 28 in gleicher oder ähnlicher Weise verwendet. Entsprechendes kann auch für den Teil der jeweiligen Zyklen 28 mit negativen Differenzdruck gelten, da hier ein Kompromiss zwischen einer schnellen und zuverlässigen und einer materialschonenden Rückführung des Beutelmaterials 5 an die Wand 7 gefunden werden kann.

Es ist jedoch alternativ oder zusätzlich auch möglich, dass die Druckverläufe der Zyklen 28 untereinander abweichen, beispielsweise um zu Beginn, also bei einem ersten Zyklus 28, mit erhöhtem positiven Differenzdruck 25 den Beginn des Ablösevorgangs zu unterstützen. Alternativ oder zusätzlich kann der positive Differenzdruck 25 über die Zyklen 28 gesteigert werden, insbesondere so dass bei bereits fortgeschrittener Ablösung des Beutelmaterials 5 von der Wand 7 das in dem kollabierten Beutel 2 verbleibende Restvolumen minimiert werden kann, um den Ablösegrad zu optimieren. Dies kann auch kombiniert werden, indem beispielsweise im ersten und im letzten Zyklus 28 jedenfalls ein maximaler positiver Differenzdruck 25 im Vergleich mit einem maximalen positiven Differenzdruck 25 in einem oder weiteren dazwischenliegenden Zyklen 28 vergrößert ist.

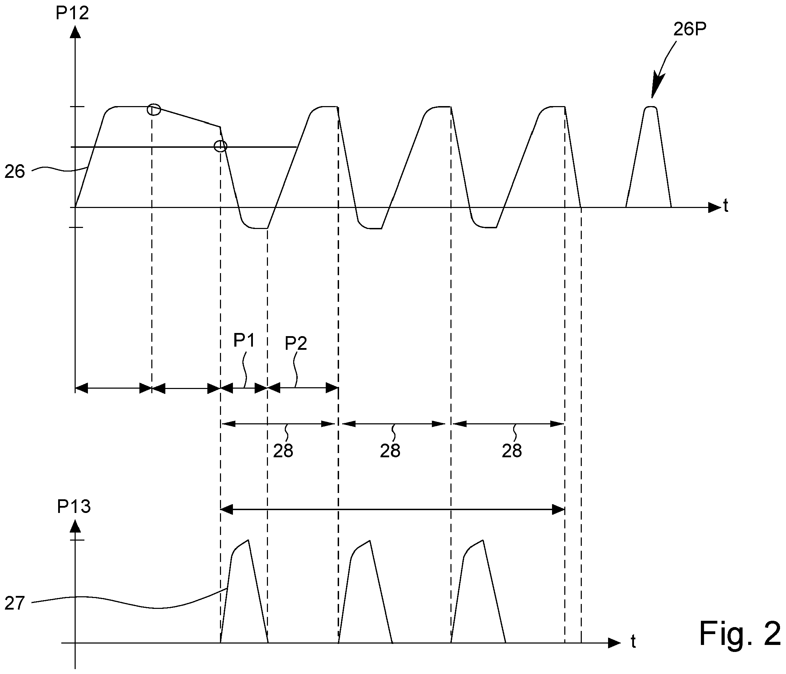

In Fig. 2 ist in einem Beispiel ein entnahmeseitiger Druckverlauf 26 über einem belüftungsseitigen Druckverlauf 27 über der Prozesszeit t dargestellt. Die Zeitachse entspricht hierbei einer Nulllinie des Drucks bezogen auf den Umgebungs(luft-) druck bzw. entspricht diesem.

Der Ablösevorgang umfasst im Darstellungsbeispiel drei Zyklen 28. Es können jedoch auch nur zwei oder mehr als drei Zyklen 28 vorgesehen sein.

Bei den Zyklen 28 ist optional zunächst der entnahmeseitige Druck P12 größer ist als der belüftungsseitige Druck P13. Hierdurch kann der Beutel 2 an die Wand 7 angedrückt werden.

Danach wird durch Abfall des entnahmeseitigen Drucks P12 und Anstieg des belüftungsseitigen Drucks P13 die Richtung der Druckdifferenz 25 umgekehrt. Hierdurch kollabiert der Beutel 2 und/oder Beutelmaterial 5 wird von der Wand 7 gelöst. Während der belüftungsseitige Druck P13 den entnahmeseitigen Druck P12 übersteigt, kann, jedenfalls in einem Teilabschnitt, der entnahmeseitige Druck P12 den Umgebungsdruck unterschreiten, was durch den unter die Zeitachse fallenden entnahmeseitigen Druckverlauf 26 angedeutet ist. Dies ist jedoch nicht zwingend.

Im Anschluss kann durch Umkehr der Richtung der Druckdifferenz (im Folgenden auch als "Druckumkehr" bezeichnet) der entnahmeseitige Druck P12 wieder größer als der belüftungsseitige Druck P13 sein. Hierdurch wird der Beutel 2 wieder an die Wand 7 angelegt. Dieser Schritt kann jedoch auch Teil oder Start eines nächsten Zyklus 28 bilden.

Es ist also bevorzugt, dass ein Zyklus 28 genau zwei Druckumkehrungen aufweist, bei denen die Differenz aus entnahmeseitigem Druck 12 und belüftungsseitigem Druck 13 das Vorzeichen wechselt, wenn die Druckumkehrungen genau einem Zyklus 28 zugeordnet werden.

Ein Zyklus 28 weist vorzugsweise genau eine zwischen zwei Vorzeichenwechseln der Druckdifferenz zwischen entnahmeseitigem Druck 12 und belüftungsseitigem Druck 13 vorgesehenen Abschnitt auf, in dem der belüftungsseitige Druck 13 den entnahmeseitigen Druck 12 ununterbrochen übersteigt. Alternativ weist ein Zyklus 28 vorzugsweise genau eine zwischen zwei Vorzeichenwechseln der Druckdifferenz zwischen entnahmeseitigem Druck 12 und belüftungsseitigem Druck 13 vorgesehenen Abschnitt auf, in dem der entnahmeseitige Druck 12 den belüftungsseitigen Druck 13 ununterbrochen übersteigt.

Ein Zyklus 28 weist vorzugsweise mindestens eine, vorzugsweise mindestens zwei Differenzdruckumkehrungen auf. Hierdurch wird der Differenzdruck alternierend.

Der jeweilige Zyklus 28 ist im Darstellungsbeispiel exemplarisch in zwei Phasen P1, P2 unterteilt. In einer ersten Phase P1 startet der belüftungsseitige Druckverlauf vorzugsweise mit einem belüftungsseitigen Druck P13, der dem Umgebungs- bzw. Normaldruck entsprechen kann. Der belüftungsseitige Druck P13 steigt im Darstellungsbeispiel zunächst steiler rampenartig an und geht dann in eine weitere, rampenartige Steigerung des belüftungsseitigen Drucks P13 mit einer verringerten Steigung über. Im Anschluss fällt der belüftungsseitige Druck P13 des belüftungsseitigen Druckverlaufs 27 wieder rampenartig, insbesondere bis auf Umgebungs- bzw. Normaldruck.

Der entnahmeseitige Druckverlauf in der ersten Phase P1 startet im Darstellungsbeispiel mit einem über dem Umgebungs- bzw. Normaldruck liegenden entnahmeseitigen Druck P12, der in der ersten Phase P1 zunächst rampenartig bis auf Normaldruck und darüber hinaus unter den Umgebungs- bzw. Normaldruck sinkt und im Anschluss in einen konstanten entnahmeseitigen Unterdruck P12 übergeht.

Im Ergebnis ergibt sich in der ersten Phase P1 ein über dem Beutelmaterial 5 bzw. dem Beutel 2 anliegender Differenzdruck, der (optional) zunächst entnahmeseitig größer ist als belüftungsseitig, im weiteren Verlauf belüftungsseitig größer wird als entnahmeseitig, wobei hierbei ein Maximum ausgebildet wird und wobei der Differenzdruck im Anschluss wieder sinkt.

In der zweiten Phase P2 ist der belüftungsseitige Druckverlauf 27 zumindest im Wesentlichen konstant und/oder der belüftungsseitige Druck P13 auf Normal- bzw. Umgebungsdruck.

Der entnahmeseitige Druck P12 des entnahmeseitigen Druckverlaufs 26 steigt in der zweiten Phase P2 rampenförmig an und passiert hierbei den Normal- bzw. Umgebungsdruck und/oder den belüftungsseitigen Druck P13. Auf diese Weise erfolgt ein Vorzeichenwechsel des Differenzdrucks 25, der über dem Beutel 2 bzw. dem Beutelmaterial 5 anliegt.

Im weiteren Verlauf steigt der belüftungsseitige Druck P12 weiter, vorzugsweise rampenförmig, an, wobei der entnahmeseitige Druck P12 über dem belüftungsseitigen Druck P13 liegt. Der entnahmeseitige Druck P12 geht im Folgenden von einem rampenartig ansteigenden in einen plateauartig, zumindest im Wesentlichen konstanten Verlauf über.

Im Anschluss kann einer zweiter oder weiterer Zyklus 28 starten, der in Bezug auf die Druckverläufe 26, 27 dem ersten Zyklus 28 ähneln kann. Im Darstellungsbeispiel gemäß Fig. 2 sind insgesamt drei Zyklen abgebildet. Abweichend hiervon können jedoch auch mehr oder weniger Zyklen vorgesehen sein, beispielsweise zwei, vier, fünf oder sechs Zyklen 28.

Am Ende des letzten Zyklus 28 werden der entnahmeseitige Druck P12 und der belüftungsseitige Druck P13 wieder auf Umgebungs- bzw. Normaldruck gebracht. Im Darstellungsbeispiel befindet sich zu diesem Zeitpunkt bzw. in der zweiten Phase des letzten Zyklus 28 der belüftungsseitige Druck P13 bereits auf Normal- bzw. Umgebungsdruck. Der entnahmeseitige Druck P12 liegt zunächst noch über dem Normal- bzw. Umgebungsdruck und wird daher, vorzugsweise rampenartig, bis auf Normal- bzw. Umgebungsdruck abgesenkt. Der Ablösevorgang ist hiermit vorzugsweise abgeschlossen.

Der Ablösevorgang wird im Darstellungsbeispiel optional durch einen Druckverlauf 26, 27 eingeleitet, bei dem der entnahmeseitige Druck P12 über den belüftungsseitigen Druck P13 und/oder über den Umgebungsdruck zunächst ansteigt, bevor er konstant bleibt und rampenartig teilweise wieder abfällt. Dieser Verlauf dient vorzugsweise einer Vorbereitung, in der ein fehlerhaftes Einlegen des Behälters 4 in die Kammer 14 oder ein Grobleck am Behälter 4 bzw. Beutel 2 erkannt werden können, bevor der Ablösevorgang startet. Ein solcher Einlegefehler oder ein solches Grobleck würden beispielsweise dadurch erkannt, dass der belüftungsseitige Druck dem entnahmeseitigen Druck (teilweise) folgt.

Im Anschluss an den letzten Zyklus 28 kann die Kammer 14 zum Auswurf des Behälters 4 geöffnet werden. Hierbei ist die Kammer 14 vorzugsweise so konstruiert, dass der Behälter 4 zunächst im Bereich seiner Entnahmeöffnung 9 an einem Verschlussteil der Kammer 14 bzw. dem Dorn 19 gehalten ist und durch Abnehmen des Verschlussteils oder entnehmen des Dorns 19 aus der Kammer 14 entnommen wird.

Ferner ist bevorzugt, dass nach Abschluss des Ablösevorgangs bzw. letzten Zyklus 28 der Behälter 4 durch einen Überdruck (bzw. Abblasen) auf der Entnahmeseite 12 bei oder nach Öffnung der Kammer 14 von dem Dorn 19 gelöst wird. Im Darstellungsbeispiel erfolgt dies durch einen Abblas-Druckpuls 26P des entnahmeseitigen Drucks P12. Dies ist jedoch nicht zwingend und kann auch auf sonstige Weise oder später erfolgen.

Der entnahmeseitige Druckverlauf 26 wird vorzugsweise durch die entnahmeseitige Druckeinrichtung 23, insbesondere in Verbindung mit dem entnahmeseitigen Ventil 20, erzeugt. Der belüftungsseitige Druckverlauf 27 wird vorzugsweise mittels der belüftungsseitigen Druckeinrichtung 24, ggf. unter Verwendung des belüftungsseitigen Ventils 21, erzeugt. Die Druckeinrichtungen 23, 24 sind vorzugsweise zu einer entsprechenden Druckerzeugung, Drucksteuerung und/oder Druckregelung ausgebildet.

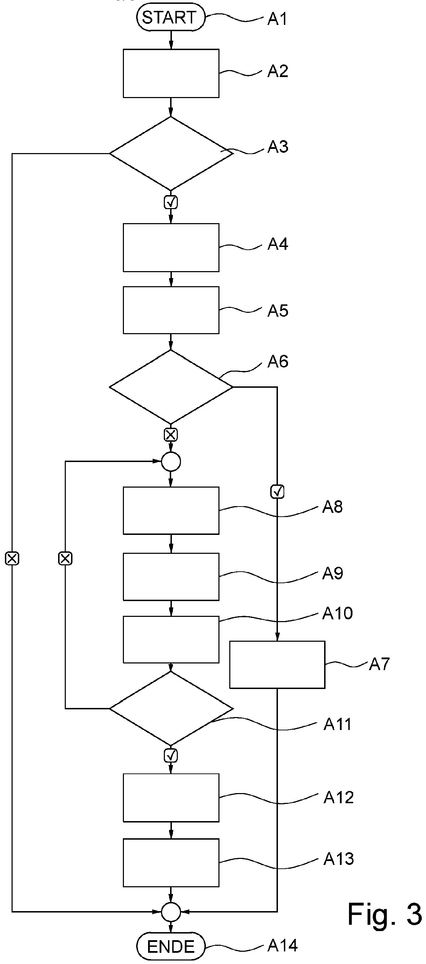

In Fig. 3 ist ein schematisches Blockdiagramm des Ablöseverfahrens dargestellt. Der Ablauf startet vorzugsweise bei Schritt A1. In Schritt A2 wird ein Behälter 4, vorzugsweise automatisch, in die Kammer 14 eingelegt und die Kammer 14 wird verschlossen.

In Schritt A3 wird, bevorzugt sensorisch, kontrolliert, ob sich ein Behälter 4 in der Kammer 14 befindet. Dies kann beispielsweise kapazitiv, optisch, induktiv oder durch einen initialen Drucktest erfolgen. Falls ein Behälter 4 in der Kammer 14 erkannt worden ist, startet im Schritt A4 der Ablösevorgang.

Zunächst erfolgt eine Grobleckerkennung bzw. Grobleckauswertung in Schritt A5. Hier können mittels Druckbeaufschlagung und Erkennung von starken Druckverlusten perforierte oder gerissene Beutelmaterialien 5 oder mangelhafte sonstige Abdichtungen vorab erkannt werden.

In Schritt A6 wird für den Fall der Erkennung eines Groblecks ein Prüfungsabbruch bzw. ein Abbruch des Ablösevorgangs mit Schritt A7 eingeleitet. Die Grobleckerkennung und/oder die Behältererkennung sind bevorzugt, jedoch nicht zwingend.

In Schritt A8 beginnt der eigentliche Ablösevorgang, vorzugsweise für einen ersten Zyklus 28, indem der entnahmeseitige Druck reduziert wird, insbesondere indem entnahmeseitig ein Vakuum und/oder Unterdruck erzeugt wird. Alternativ oder zusätzlich wird in Schritt A9 die Belüftungsseite mit einem Überdruck beaufschlagt. Insgesamt wird also ein Differenzdruck 25 von der Belüftungsseite 13 in Richtung der Entnahmeseite 12 erzeugt, der das Behältermaterial 5 von der Wand 7 ablöst.

In Schritt A10 erfolgt vorzugsweise eine Entlüftungsphase. Diese kann mit einer Aufblaszeit beginnen, in der das Beutelmaterial 5 durch Druck von Innen wieder an die Innenseite 6 der Wand 7 angelegt wird, um den Ausgangszustand vor dem ersten Zyklus 28 wieder zu erreichen. Im Anschluss können die Entnahmeseite 12 und/oder die Belüftungsseite 13 optional auf Normaldruck bzw. Umgebungsdruck gebracht werden.

Daraufhin wird in Schritt A11 überprüft, ob die beabsichtigte Anzahl von Zyklen 28 bereits erreicht ist. Falls dies nicht der Fall ist, erfolgen die Schritte A8 bis A10 erneut, bis die beabsichtigte Anzahl von beispielsweise insgesamt drei oder vier Zyklen 28 erfolgt ist.

Wenn die beabsichtigte Anzahl von Zyklen 28 erfolgt ist, wird optional in Schritt A12 das Behältermaterial 5 durch einen Überdruck innerhalb des Beutels 2 bzw. durch einen Differenzdruck zwischen der Entnahmeseite 12 und der Belüftungsseite 13 das Beutelmaterial 5 wieder an die Innenseite 6 der Wand 7 angelegt.

Daraufhin kann in Schritt A13 die Entlüftung der Kammer 14 erfolgen, insbesondere durch Verbinden der Entnahmeseite 12 und der Belüftungsseite 13 mit der Umgebung oder durch Herstellung von Umgebungsdruck auf sonstige Weise.

Daraufhin kann die Kammer 14 geöffnet und ggf. der Behälter 4 mittels des auf den Ablösevorgang folgenden Abblas-Druckpulses 26P abgeblasen werden.

Der Ablösevorgang endet dann mit Schritt A14, kann jedoch auch nahtlos in weitere Prüfvorgänge übergehen, wobei die Schritte A12 bis A14 optional sind.

Eine Periodendauer, die der Dauer eines Zyklus 28 entspricht, dauert vorzugsweise mehr als 0,5 s, vorzugsweise mehr als 0,7 s, insbesondere mehr als 1 s, und/oder weniger als 3 s, vorzugsweise weniger als 2 s, insbesondere weniger als 1,5 s. Die Dauer einer Phase positiven Differenzdrucks 25 beträgt vorzugsweise 1/3 oder die Hälfte hiervon. Dies hat sich als vorteilhaft im Hinblick auf einen guten Ablöseerfolg bei akzeptablen Durchsetzen gezeigt.

Der, insbesondere maximale, (positive) Differenzdruck 25, insbesondere in Ablöserichtung bzw. von der Belüftungsseite 13 zur Entnahmeseite 12, beträgt vorzugsweise mehr als 100 kPa, vorzugsweise mehr als 150 kPa und/oder weniger als 600 kPa, vorzugsweise weniger als 400 kPa, insbesondere weniger als 250 kPa. Auf diese Weise kann eine sichere und zügige sowie ausreichend schonende Ablösung erreicht werden.

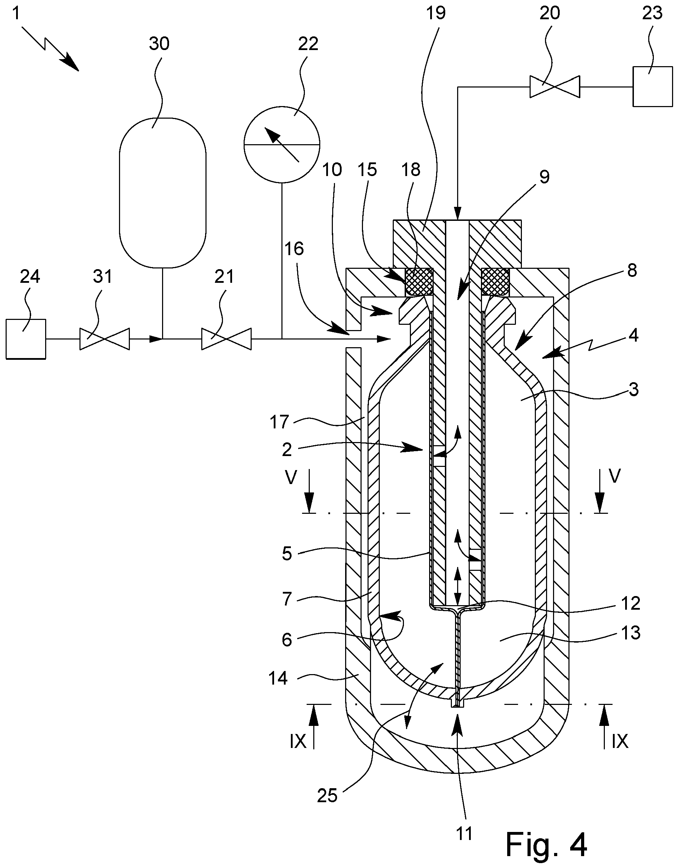

In Fig. 4 ist eine erfindungsgemäße Anlage 1 (insbesondere zur Bestimmung des Ablösegrads) dargestellt, wobei im Folgenden lediglich auf die Ergänzungen im Hinblick auf die Ausführungsform gemäß Fig. 1 eingegangen wird. Im Übrigen wird auf die Erläuterung im Zusammenhang mit Fig. 1 bis 3 verwiesen. Zudem sei klarstellend erwähnt, dass die Eigenschaften der Anlage 1 von Fig. 1 auf die der Fig. 4 übertragbar sind bzw. die zuvor beschriebenen Verfahren auch mit der Anlage 1 gemäß Fig. 4 durchführbar sind.

Die Anlage 1 gemäß Fig. 4 weist ergänzend ein Druckspeichervolumen 30 auf, das getrennt von dem Behälter 4 auf einen Solldruck gebracht werden kann und im Anschluss mit der Belüftungsseite 13 des Behälters 4 fluidisch verbunden werden kann, um einen Druckausgleich zwischen dem Druckspeichervolumen 30 und der Belüftungsseite 13 zu ermöglichen.

Der Drucksensor 22 ist mit dem resultierenden Gesamtsystem aufweisend das Druckspeichervolumen 30 und die Belüftungsseite 13 verbunden, so dass der Drucksensor 22 den aufgrund des Druckausgleichs resultierenden Druck messen kann.

Dieser resultierende Druck dient hier bei Verwendung der Anlage 1 als Kenngröße für den Ablösegrad oder wird zur Ermittlung des Ablösegrads des Beutelmaterials 5 von der Wand 7 verwendet. Insbesondere wird ein Schwellwertvergleich durchgeführt.

Wenn der Ablösegrad hoch oder maximal ist, der Beutel 2 also vollständig kollabieren kann (ein Beispiel für eine als vollständig angesehene Kollabierung des Beutels ist in Fig. 4 zu sehen) und das Volumen zwischen dem zumindest im Wesentlichen vollständig kollabierten Beutel 2 und der Wand 7 - von dem in den Innenraum 3 hineinragenden Dorn 19 und dem Beutelmaterialvolumen abgesehen - zumindest im Wesentlichen vollständig für den Druckausgleich zur Verfügung steht, resultiert aufgrund des Druckausgleichs bei ursprünglichem Überdruck im Druckspeichervolumen 30 ein geringerer resultierender Druck, als wenn der Ablösegrad geringer ist und folglich ein Teil des Behälterinnenraums 3 noch durch anhaftendes Beutelmaterial 5 blockiert ist. In diesem Fall resultiert ein im Vergleich höherer Druck nach Durchführung des Druckausgleichs.

Entsprechend wird bevorzugt ein maximal zulässiger Druckwert definiert, der zu einem minimal beabsichtigten Ablösegrad korrespondiert. Wenn der nach dem Druckausgleich resultierende Druck diesen Schwellwert überschreitet, wird vorzugsweise automatisch eine mangelnde Ablösung von Beutelmaterial 5 detektiert.

Bei Detektion einer mangelhaften Ablösung des Beutelmaterials 5 wird der Behälter 4 vorzugsweise verworfen, insbesondere automatisch ausgeworfen und entsorgt. Grundsätzlich ist auch die Durchführung eines oder mehrerer weiterer Ablösezyklen 28 vor Auswurf des Behälters 4 möglich. Dies geht jedoch mit einer erhöhten Wahrscheinlichkeit von Defekten am Beutelmaterial 5 einher, weshalb ein unmittelbares Verwerfen und Entsorgen eines Behälters 4 mit unzureichend abgelöstem Beutelmaterial 5 bevorzugt ist.

Um reproduzierbare Ergebnisse zu erreichen, kann vor dem Druckausgleich das Beutelmaterial 5 entweder durch Überdruck auf der Entnahmeseite 12 an die Wand 7 angelegt werden oder mittels eines Differenzdrucks in die entgegengesetzte Richtung, insbesondere durch Erzeugung eines Unterdrucks oder Vakuums innerhalb des Beutels, kann der Beutel 2 soweit wie möglich kollabiert werden.

Vorzugsweise erfolgt der Druckausgleich unabhängig von einem Innendruck des Behälters 4 bzw. Beutels 2, also dem Druck auf der Entnahmeseite 12. Hierzu kann die Entnahmeseite 12 während der Messung belüftet werden, so dass in diesem Bereich Umgebungsdruck herrscht. Alternativ oder zusätzlich kann die Entnahmeseite 12 evakuiert werden oder es wird ein Unterdruck angelegt, der möglichst für jeden einzelnen zu testenden Behälter 4 derselbe ist, um bei unvollständiger Ablösung des Beutelmaterials 5 Einflüsse durch sich stärker oder schwächer dehnendes Beutelmaterial 5 zu vermeiden.

Das Druckspeichervolumen 30 kann als Druckausgleichsbehälter mit einem vorgegebenen Volumen realisiert sein. Die belüftungsseitige Druckeinrichtung 24 kann das Druckspeichervolumen 30 durch Öffnung eines Füllventils 31 auf einen vorgebbaren Druck bringen und/oder mit einem vorgebbaren (Gas-) Volumen befüllen, woraus sich dann ein Überdruck ergibt. Durch Schließen des Füllventils 31 und anschließendes Öffnen des belüftungsseitigen Ventils 21 kann der Druckausgleich initiiert werden. Der aufgrund des Druckausgleichs resultierende Druck kann dann mit dem Drucksensor 22 gemessen und ausgewertet werden.

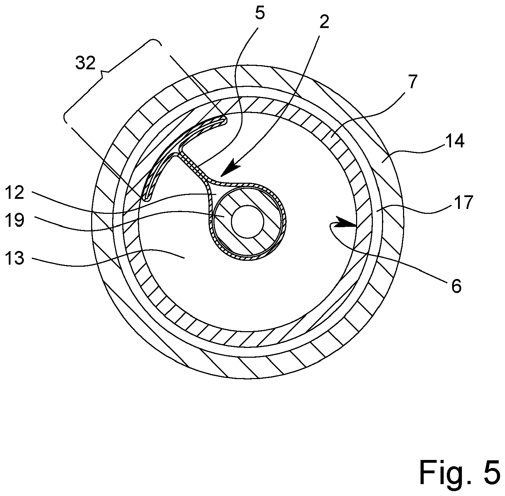

Fig. 5 zeigt einen Querschnitt der Kammer 14 mit eingesetztem Behälter 4 und dem zumindest im Wesentlichen kollabierten bzw. maximal möglich kollabierten Beutel 2. Das Beutelmaterial 5 hat sich in einem überwiegenden Abschnitt der Innenseite 6 der Wand 7 gelöst und umschlingt im Darstellungsbeispiel den Dorn 19. Ferner haftet das Beutelmaterial 5 noch in einem streifenartigen Abschnitt an der Innenseite 6 der Wand 7, vorzugsweise entlang einer Erstreckung zwischen der Entnahmeöffnung 9 und der Belüftungsöffnung 11 und/oder quer hierzu über eine Breite, die Reststreifenbreite 32 genannt wird. Eine gewisse Reststreifenbreite 32 ist hierbei von Vorteil, da der Beutel 2 zumindest im Wesentlichen überall aneinander anliegen kann und daher ein verschwindend geringes Restvolumen umschließt, also zumindest im Wesentlichen vollständig kollabiert oder kollabierbar wird.

Ferner hat das Anhaften des Beutelmaterials 5 in einem streifenartigen Abschnitt längs entlang der Wand 7 den Vorteil, dass eine zumindest im Wesentlichen (lediglich) radiale Kollabierung des Beutels 2 erreicht bzw. vorgegeben werden kann, was das Verstopfen eines Tauchrohrs oder einer sonstigen Entnahmeeinrichtung im späteren Einsatz des Behälters 4 zu vermeiden hilft.

Die Erzeugung des streifenartigen Abschnitts kann dadurch bewirkt werden, dass das Beutelmaterial 5 im Halsbereich 10 und im Bereich der Belüftungsöffnung 11 gehalten ist. Ferner ist bevorzugt, dass das Beutelmaterial 5 im Bereich der Belüftungsöffnung 11 vor Durchführung eines bzw. des Ablöseverfahrens asymmetrisch in Bezug auf eine Mittelachse des Behälters 4 angelöst wird. Hierdurch wird ein Startpunkt für die Ablösung vorgegeben und auf einer entgegengesetzten Seite kann der Reststreifen gebildet werden.

Der Behälter 4 ist vorzugsweise mit einer Entnahmeeinrichtung (nicht dargestellt) kombinierbar, die ein Tauchrohr aufweist, das durch die Entnahmeöffnung 9 in die Entnahmeseite des Beutels 2 ragt. Mit dem Tauchrohr kann Produkt aus der Entnahmeseite 12 entnommen werden. Der streifenartige Abschnitt erstreckt sich vorzugsweise jedenfalls im Bereich einer, bevorzugt stirnseitigen, Öffnung des Tauchrohrs.

Die vorliegende Erfindung betrifft also in einem auch unabhängig realisierbaren Aspekt folglich die Kombination des vorschlagsgemäßen Behälters 4 mit einer Entnahmeeinrichtung aufweisend ein Tauchrohr, das entnahmeseitig in den Beutel 2 eingesetzt ist, wobei der Beutel 2 in einem streifenartigen Abschnitt längs entlang der Wand 7 jedenfalls auf Höhe einer Öffnung des Tauchrohrs an der Wand 7 anhaftet.

Die Ablösung unter Beibehaltung einer Reststreifenbreite 32, über die das Behältermaterial 5 noch an der Behälterwand 7 anhaftet, beträgt vorzugsweise mehr als 45°, insbesondere mehr als 60°, insbesondere mehr als 90° bezogen auf 360° der inneren Umfangslinie der Wand 7.

Besonders bevorzugt beträgt die Reststreifenbreite 32 zwischen 50 % und 150 %, vorzugsweise mehr als 75 % und/oder weniger als 125 % von UR = PI • (RI - DK/4) - RI. Hierbei entspricht UR der Länge des inneren radialen Abschnitts der Wand 7, in dem das Beutelmaterial 5 über die Reststreifenbreite 32 noch anhaftet. PI entspricht der irrationalen Konstante beginnend mit den Ziffern 3,1415 (Kreiszahl). RI entspricht dem Innenradius des Behälters 4 bzw. der Hälfte des sich von Wand 7 zu Wand 7 durch eine Mittelachse erstreckenden Durchmessers. DK entspricht dem Außendurchmesser des Dorns 19. Der Außendurchmesser DK des Dorns 19 beträgt vorzugsweise weniger als die Hälfte, insbesondere weniger als 1/4 des Innendurchmessers des Behälters 4.

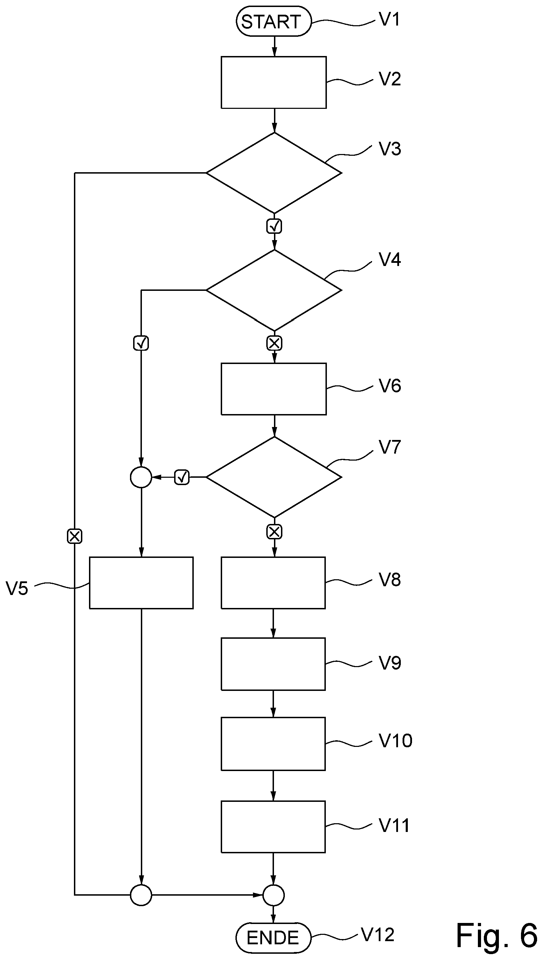

In Fig. 6 ist ein schematisches Blockdiagramm dargestellt, anhand dessen im Folgenden exemplarisch ein Ablauf einer vorschlagsgemäßen Volumenprüfung bzw. Prüfung oder Ermittlung des Ablösegrads erläutert wird.

Das Verfahren beginnt mit Schritt V1, woraufhin in Schritt V2 die Kammer 14 verschlossen und in Schritt V3 der grundsätzliche bzw. korrekte Einsatz des Behälters 4 in die Kammer 14 überprüft wird. Dies kann, insbesondere wie bereits zuvor beschrieben, sensorisch erfolgen. Falls kein Behälter eingesetzt ist, wird das Verfahren beendet bzw. mit Schritt V1 oder V2 neu initiiert. Schritt V1, V2 und/oder V3 kann/können entfallen, wenn der Behälter von einem vorhergehenden Verfahren noch eingesetzt ist.

In Schritt V4 wird daraufhin optional kontrolliert, ob bereits, insbesondere im bevorzugt zuvor durchgeführten Ablöseverfahren, ein Grobleck erkannt worden ist. Bei bereits vorheriger Erkennung eines Groblecks wird die Prüfung in Schritt V5 abgebrochen und der Behälter 4 verworfen bzw. aussortiert und/oder entsorgt.

Anderenfalls wird in Schritt V6 die Ermittlung des Gesamtvolumens aus Druckspeichervolumen 30, durch Kollabieren des Beutels 2 belüftungsseitig verfügbaren und hier zwischen befindlichem Volumen der Anlage 1 bzw. des Ablösegrads oder der hierzu korrespondierenden Kanngröße bzw. Drucks gestartet.

Im Darstellungsbeispiel erfolgt dies insbesondere durch erneute Vorprüfung auf Groblecks in Schritt V7. Die Schritte V1 bis V7 sind ganz oder teilweise optional, haben sich jedoch aus Effizienz und Geschwindigkeitsgründen als bevorzugt herausgestellt.

Die eigentliche Ermittlung des Ablösegrads des Beutels 2 von der Innenseite 6 der Wand 7 des Behälters 4 bzw. einer ausreichenden Kollabierfähigkeit des Beutels 2 beginnt in Schritt V8 mit der Vorbereitung des Druckspeichervolumens 30. Insbesondere wird das Druckspeichervolumen 30 auf einen vorgegebenen oder vorgebbaren Druck, bevorzugt Überdruck, gebracht. Alternativ oder zusätzlich wird das vorgegebene Druckspeichervolumen 30 mit einem ebenfalls vorgegebenen Gasvolumen gefüllt, wobei sich in dem Druckspeichervolumen 30 ein Überdruck bildet.

In Schritt V9 wird dann das Druckspeichervolumen 30 von der belüftungsseitigen Druckeinrichtung 24 getrennt, insbesondere indem das Füllventil 31 geschlossen wird. Im Anschluss wird das Druckspeichervolumen 30 durch Öffnen des Ventils 21 mit der Belüftungsseite 13 verbunden. Es erfolgt also ein Zuschalten eines vorgegebenen, unter Überdruck stehenden Druckspeichervolumens 30 zu der Belüftungsseite. Hierbei strömt Gas, insbesondere Luft, oder ein sonstiges geeignetes kompressibles Medium, aus dem Druckspeichervolumen 30 durch das belüftungsseitige Ventil 21 in die Kammer 14 und durch die Belüftungsöffnung 11 belüftungsseitig in den Behälter 4. Hierbei erfolgt ein Druckausgleich zwischen dem Druckspeichervolumen 30 und der Belüftungsseite 13.

Der resultierende Druck nach Druckausgleich zwischen Druckspeichervolumen 30 und der Belüftungsseite 13 korrespondiert zu dem Gesamtvolumen des Druckspeichervolumens, der Verbindungsleitungen, dem belüftungsseitigen Volumen der Kammer 14 und dem durch das Beutelmaterial 5 innerhalb des Behälters 4 nicht blockierten Volumens. Aufgrund letzterer Komponente lassen sich folglich Rückschlüsse auf den Ablösegrad ziehen. Entsprechend wird in Schritt V10 der Ablösegrad bestimmt oder kontrolliert, vorzugsweise durch Messung des Drucks, der sich belüftungsseitig nach Durchführung des beschriebenen Druckausgleichs ergibt, und/oder Vergleich dieses Drucks mit einer Vorgabe, einem Schwellwert o. dgl.

In Schritt V11 kann dann, vorzugsweise optional, die Kammer 14 entnahmeseitig und/oder belüftungsseitig belüftet (auf Umgebungsdruck gebracht) und zur Entnahme des Behälters 4 geöffnet werden. In Schritt V12 wird das Verfahren dann beendet und kann mit einem weiteren Behälter 4 erneut gestartet werden.

Das Druckspeichervolumen 30 ähnelt vorzugsweise dem Volumen des Behälters 4. Insbesondere beträgt das Druckspeichervolumen 30 mehr als das 0,5-fache, vorzugsweise mehr als das 1-fache und/oder weniger als das 10-fache, vorzugsweise weniger als das 5-fache des Behältervolumens. Das Behältervolumen ist insbesondere das Volumen des Behälters 4 innerhalb des Beutels 2 bei vollständig an der Wand 7 angeordnetem Beutelmaterial 5. Ein Druckspeichervolumen 30, das dem Behältervolumen ähnelt, bietet den Vorteil, dass, vorzugsweise bei bevorzugt kleinem Volumen der Kammer 14, insbesondere einem Volumen, das das Dreifache oder das Doppelte des Behältervolumens unterschreitet, eine hohe Sensitivität bzw. Auflösung erreicht werden kann. Bei größerem Druckspeichervolumen 30 ändert sich der resultierende Druck gegenüber dem Druck des Druckspeichervolumens 30 verhältnismäßig wenig und wenn das Druckspeichervolumen 30 viel kleiner als das Behältervolumen ist, resultiert ein verhältnismäßig geringer Druck, der entsprechend wenig von dem Ablösegrad abhängt.

Das Druckspeichervolumen 30 wird zu Beginn des Verfahrens vorzugsweise auf einen Überdruck gebracht, der den entnahmeseitigen Druck bzw. dem Umgebungsdruck bei belüfteter Entnahmeseite 12 übersteigt, vorzugsweise um mindestens 60 kPa, vorzugsweise mehr als 100 kPa und/oder weniger als 400 kPa, vorzugsweise weniger als 300 kPa. Ein Überdruck des Druckspeichervolumens 30 zwischen 50 kPa und 200 kPa ist besonders bevorzugt, da hierdurch der Ablösegrad zuverlässig ermittelt werden kann, ohne bei dem Druckausgleich den Beutel 2 maßgeblich zu beanspruchen.

In einem weiteren, auch unabhängig realisierbaren Aspekt der vorliegenden Erfindung wird, vorzugsweise ebenfalls mit der Anlage gemäß Fig. 1 oder Fig. 4, der Grad der Dichtigkeit des Beutels 2 ermittelt. Hierbei wird vorzugsweise eine Genauigkeit erreicht, um auch Feinlecks, Dünnstellen o. dgl. zu ermitteln, um eine spätere Zuverlässigkeit gewährleisten zu können.

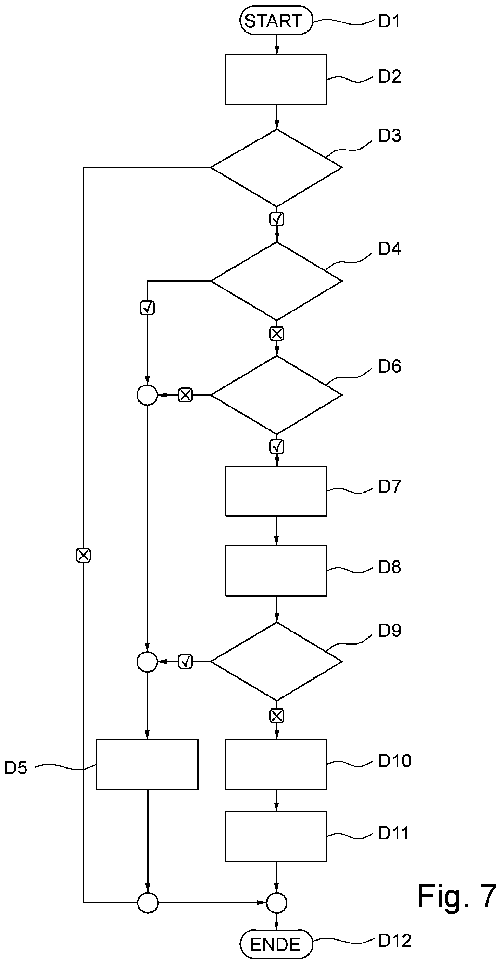

In Fig. 7 ist ein schematisches Blockschaltbild dargestellt, anhand dessen eine bevorzugte Dichtigkeitsprüfung näher erläutert wird.

Das Verfahren startet vorzugsweise in Schritt D1, worauf im Schritt D2 ein Verschließen der Kammer 14 bei eingesetztem Behälter 4 erfolgt. In Schritt D3 wird vorzugsweise kontrolliert, ob ein Behälter 4 in die Kammer 14 eingesetzt ist.

In Schritt D4 wird vorzugsweise ermittelt, ob bereits bei einem vorherigen, beispielsweise dem Ablöseverfahren, ein Grobleck identifiziert worden ist. Bei Identifikation eines Groblecks wird in Schritt D5 vorzugsweise die Prüfung abgebrochen. Hierbei kann der Schritt D4 mit dem Schritt V3 bzw. den Schritten A4, A5 korrespondieren oder diesen entsprechen oder das Ergebnis eines oder mehrerer dieser Schritte berücksichtigen.

In Schritt D6 wird vorzugsweise überprüft, ob ein ausreichender Ablösegrad erreicht worden ist. Insbesondere wird hierbei überprüft, ob nach dem Druckausgleich der resultierende Druck niedrig genug ist, also ein Schwellwert unterschreitet. Wenn dies nicht der Fall ist, wird die Prüfung ebenfalls mit Schritt D5 abgebrochen. Der Schritt D6 kann das im Zusammenhang mit Fig. 6 beschriebene Verfahren ganz oder teilweise realisieren, beispielsweise die Schritte V8 bis V10.

Die Schritte D1 bis D6 sind vorzugsweise optional und müssen nicht sämtlichst durchgeführt werden. Die Dichtigkeitsprüfung kann insbesondere auch ohne die Schritte D1 bis D6 erfolgen.

Das vorschlagsgemäße Verfahren zur Prüfung der Dichtigkeit startet mit Schritt D7. In Schritt D8 wird zunächst nach groberen Lecks gesucht. Hierzu ist es bevorzugt, dass die Belüftungsseite 13 auf Unterdruck gebracht bzw. evakuiert wird, beispielsweise mittels der belüftungsseitigen Druckeinrichtung 24. Das Druckspeichervolumen 30 wird in diesem Zusammenhang nicht benötigt, kann mittels eines Ventils (nicht dargestellt) abgeschottet oder es kann eine Anlage 1 gemäß Fig. 1 verwendet werden.

Zur Dichtigkeitsprüfung wird im Anschluss das belüftungsseitige Ventil 21 geschlossen. Mit dem Drucksensor 22 kann dann eine Verschlechterung des Vakuums bzw. ein Druckanstieg ermittelt werden, der zu einem Grad der Undichtigkeit des Beutels 2 korrespondiert.

In Schritt D8 erfolgt nach kurzer Wartezeit zur Vermeidung von Messungenauigkeiten eine sogenannte Grobleckauswertung, bei der der Druckverlauf des Vakuums auf stärkere Druckanstiege hin untersucht wird. Wird in Schritt D9 bei Auswertung des gemessenen Druckanstiegs ein gröberes Leck identifiziert, wird die Prüfung gemäß Schritt D5 abgebrochen.

Wenn ein Grobleck nicht identifiziert wird, folgt eine sogenannte Feinleckauswertung in Schritt D10, wobei nach einer vorgegebenen Warteperiode ein Druckanstieg mit dem Drucksensor 22 ermittelt wird. Wenn der Druckanstieg einen gewissen Schwellwert überschreitet, wird eine mangelnde Dichtigkeit festgestellt und der Behälter 4, vorzugsweise automatisch, verworfen, aussortiert, entsorgt o. dgl.

Falls der Druckanstieg unterhalb des vorgegebenen Schwellwerts liegt, hat der Behälter 4 den Test bestanden, also einen ausreichenden Grad an Dichtigkeit. Das Verfahren wird dann mit einer Belüftung der Belüftungsseite 13 und ggf. Entlüftung der Entnahmeseite 12, Öffnen der Kammer 14 und/oder Auswurf des Behälters 4 in Schritt D11 abgeschlossen und dann in Schritt D12 beendet.

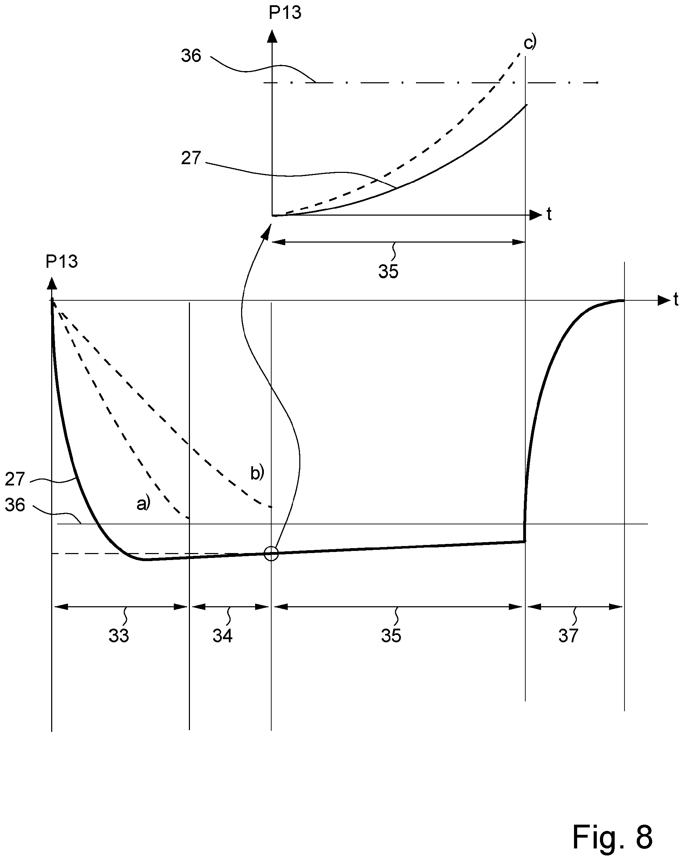

In Fig. 8 ist ein entsprechender Druckverlauf des belüftungsseitigen Drucks P13 für die Dichtigkeitsprüfung und darüber ein in Bezug auf die den belüftungsseitigen Druck 13 repräsentierende Y-Achse vergrößerter Ausschnitt dargestellt. Im unteren Diagramm entspricht die eingezeichnete X-Achse der Zeit t und schneidet die den belüftungsseitigen Druck P13 repräsentierende Y-Achse im Null-Punkt bzw. bei Umgebungsdruck.

In einem ersten Abschnitt 33 wird die Prüfung vorbereitet, indem die Belüftungsseite 13 evakuiert bzw. ein Unterdruck erzeugt wird, insbesondere durch Abpumpen von Luft. Der belüftungsseitige Druck P13 fällt hierbei mit einer abnehmenden Geschwindigkeit und geht mit der Zeit in einen asymptotischen Verlauf über und erreicht ein absolutes Minimum. Anschließend wird die evakuierte bzw. unter Unterdruck gesetzte Belüftungsseite 13 verschlossen. Die Entnahmeseite 12 hat vorzugsweise Umgebungsdruck oder Überdruck gegenüber der Belüftungsseite 13 bzw. der Umgebung.

Wenn in diesem Abschnitt 33 kein ausreichendes Vakuum bzw. kein ausreichender Unterdruck erzeugt werden kann bzw. der erzeugbare Unterdruck eine Schwelle nicht erreicht, im Darstellungsbeispiel gemäß Fig. 8 gestrichelt angedeutet, wird vorzugsweise ein Grobleck detektiert (vgl. auch die Diskussion zu den Schritten D8 und D9 aus Fig. 7). In diesem Fall kann die Messung abgebrochen und der betroffene Behälter 4 verworfen werden.

Wenn im ersten Abschnitt 33 ein ausreichendes bzw. vorgegebenes Vakuum bzw. ein vorgegebener Unterdruck erreicht wird, wird optional zunächst im zweiten Abschnitt 34 eine Karenzzeit eingehalten. In dieser Karenzzeit ändert sich der belüftungsseitige Druck P13 nur geringfügig bzw. pendelt sich ein. Im Darstellungsbeispiel steigt der belüftungsseitige Druck P13 beispielsweise durch Undichtigkeiten der Anlage 1 geringfügig.

Im Anschluss wird in einem dritten Abschnitt 35 die eigentliche Messung durchgeführt, die der Feinleckbestimmung, wie im Zusammenhang mit Schritt D10 aus Fig. 7 erläutert, entspricht. In diesem Abschnitt steigt der belüftungsseitige Druck jedenfalls bedingt durch Undichtigkeiten der Anlage 1 weiter an. Der Grad und/oder die Geschwindigkeit dieses Druckanstiegs ist erhöht, wenn zusätzlich zu Undichtigkeiten der Anlage 1 der Beutel 2 Undichtigkeiten aufweist. Bei Undichtigkeiten kann es sich um Löcher oder um Dünnstellen handeln, die keine ausreichende Diffusionsbarriere bilden.

In der oberen Grafik aus Fig. 8 ist mit vergrößerter Y-Achse dieser dritte Abschnitt 35 dargestellt, wobei ein Schwellwert 36 mittels einer strichpunktierten Linie angedeutet ist und die X-Achse als Zeitachse die den belüftungsseitigen Druck P13 repräsentierende Y-Achse bei dem belüftungsseitigen Druck P13 zum Start des dritten Abschnitts 35 schneidet. Dies erfolgt aus Gründen der besseren Anschaulichkeit, kann jedoch auch dem Vorgehen zur Detektion von Feinlecks entsprechen, da für die Bestimmung von Feinlecks vorzugsweise eine Druckdifferenz zwischen Start und Endzeitpunkt des dritten Abschnitts 35 verwendet wird.

In einer Variante wird der Schwellwert 36 in Abhängigkeit von dem belüftungsseitigen Druck P13 zum Start des dritten Abschnitts 35 festgelegt, wobei der Schwellwert 36 um eine aufgrund von Undichtigkeiten zu erwartenden Druckanstieg zuzüglich eines Toleranzwerts oberhalb des belüftungsseitigen Drucks P13 zum Start des dritten Abschnitts 35 angesetzt wird. Es handelt sich also um einen variablen Schwellwert 36 bezogen auf den absoluten Druck bzw. um einen, insbesondere festen, vorgegebenen oder vorgebbaren Schwellwert 36, der auf die Differenz des belüftungsseitigen Drucks P13 zwischen Beginn und Ende der Messung bzw. des dritten Abschnitts 35 bezogen ist.

Am Ende der Messung bzw. des dritten Abschnitts 35 bzw. nach einer vorgegebenen Wartezeit kann der Anstieg des belüftungsseitigen Drucks P13 als Druckdifferenz ermittelt und, vorzugsweise, mit dem Schwellwert 36 verglichen werden.

Alternativ oder zusätzlich kann der Schwellwert 36 auch als absoluter belüftungsseitiger Druck P13 vorgegeben werden. Hierbei wird der Schwellwert 36 vorzugsweise um einen aufgrund von Undichtigkeiten zu erwartenden Druckanstieg zuzüglich eines Toleranzwerts oberhalb eines mindestens zu erreichenden Unterdrucks angesetzt. Wenn beispielsweise im ersten Abschnitt 33 ein Unterdruck von mindestens einem Zielwert, beispielhaft 60 kPa, erreichen soll, kann der Schwellwert 36 bei einem Unterdruck über diesem Zielwert, beispielsweise von 40 bis 300 Pa über dem Zielwert angesetzt werden.

Wenn die Druckdifferenz bzw. der belüftungsseitige Druck P13 den Schwellwert 36 überschreitet, in der oberen Grafik als Kurve c) gestrichelt angedeutet, gilt ein Feinleck als detektiert. Der Behälter 4 wird daraufhin vorzugsweise aussortiert bzw. verworfen. Wenn die Undichtigkeit hingegen so gering ist, dass sie den üblichen Undichtigkeiten der Anlage 1 entspricht, in der oberen Grafik mit der durchgezogenen Linie angedeutet, bzw. wenn der Schwellwert 36 nicht erreicht oder überschritten wrid, wird die Dichtigkeitsprüfung als bestanden angenommen.

Im Folgenden, vierten Abschnitt 37, wird die Belüftungsseite 13 vorzugsweise wieder belüftet (auf Normaldruck gebracht) und das Verfahren abgeschlossen. Hierbei kann die Belüftungsseite 13 mit der Umgebung verbunden werden, was zu einem asymptotischen Druckabfall auf Umgebungsdruckniveaus führt, wie in Fig. 8 exemplarisch dargestellt.

Die Dauer des dritten Abschnitts 35 entspricht vorzugsweise mehr als 0,5 s, insbesondere mehr als 1 s und/oder weniger als 5 s, vorzugsweise weniger als 4 oder 3 s. Hierdurch kann eine ausreichende Genauigkeit bei gleichzeitig schneller Durchführung des Tests erreicht werden.

Der Schwellwert 36 hängt vorzugsweise von einer Dichtigkeit des Gesamtsystems bzw. der Anlage 1 ab. Dieser kann beispielsweise bei einigen 10 oder wenigen 100 Pa über dem belüftungsseitigen Druck P13 zu Beginn der Messung bzw. zu Beginn des Abschnitts 35 liegen, bevorzugt mehr als 60 Pa oder 80 Pa und/oder weniger als 200 Pa, vorzugsweise weniger als 150 Pa oder 120 Pa.

Die beschriebenen Verfahren sind in unterschiedlicher Weise ganz oder teilweise miteinander kombinierbar. Besonders bevorzugt erfolgen die Ablösung des Beutelmaterials 5 und/oder die Ermittlung des Ablösegrads und/oder die Dichtigkeitsprüfung unmittelbar aufeinander folgend, insbesondere ohne Austausch oder Wechsel des Behälters 4, mit derselben Kammer 14 und/oder kontinuierlich. Hierbei ist es möglich, dass einige der zuvor erläuterten Schritte weggelassen werden. Beispielsweise wird das Ablöseverfahren jedenfalls im Umfang der Schritte A8 bis A11 durchgeführt. Alternativ oder zusätzlich wird vorzugsweise das Verfahren zur Ermittlung des Ablösegrads im Umfang der Schritte V8 bis V10 durchgeführt. Alternativ oder zusätzlich wird das Verfahren zur Dichtigkeitsprüfung jedenfalls im Umfang des Schritts D10, vorzugsweise der Schritte D8 bis D10 durchgeführt.

Die erfindungsgemäße Anlage 1 ist vorzugsweise zur Durchführung des erfindungsgemäßen Verfahrens ausgebildet. Hierbei kann die Anlage 1 eine oder mehrere Kammern 14 aufweisen. Die Verfahren können also, bevorzugt nacheinander, in derselben Kammer 14 oder in zwei oder mehr Kammern 14 durchgeführt werden. Wenn unterschiedliche Kammern 14 für die unterschiedlichen Verfahren vorgesehen sind, werden die jeweiligen Behälter 4 vorzugsweise von einer ersten Kammer 14 in eine nachfolgende Kammer 14 überführt, um ein weiteres der vorschlagsgemäßen Verfahren durchzuführen.

Die Anlage 1 gemäß dem Darstellungsbeispiel aus Fig. 4 ist beispielsweise dazu geeignet, das Verfahren zur Bildung des kollabierbaren Beutels 2 durchzuführen, indem mittels der entnahmeseitigen Druckeinrichtung 23 oder belüftungsseitigen Druckeinrichtung 24 der veränderliche, insbesondere alternierende, Differenzdruck 25 erzeugt wird. Erfindungsgemäß ist die Anlage 1 dazu ausgebildet, mittels des Druckspeichervolumens 30 das Verfahren zur Ermittlung des Ablösegrads bzw. zur Bestimmung der Kollabierfähigkeit oder hierzu korrespondierenden Kenngröße durchzuführen. Zusätzlich kann die Anlage 1 gemäß Fig. 4 auch dazu geeignet sein, mit dem beschriebenen Verfahren den Grad der Dichtigkeit des Beutels zu ermitteln. Die Anlage 1 ist also mit derselben Kammer 14 dazu geeignet, ein oder mehrere der vorschlagsgemäßen Verfahren in unterschiedlichen Kombinationen auszuführen. Vorzugsweise ist die Anlage 1 hierzu auch steuerungstechnisch eingerichtet.

Die vorschlagsgemäße Anlage 1 kann alternativ oder zusätzlich mehrere Stationen jeweils mit einer Kammer 14 aufweisen, die jeweils zur Durchführung des vorschlagsgemäßen Verfahren ausgebildet sind. Auf diese Weise können mit derselben Anlage 1 mehrere Behälter 4 gleichzeitig dem oder den vorschlagsgemäßen Verfahren zugeführt werden. Durch diese Parallelisierung kann der Gesamtdurchsatz vergrößert werden.

Ferner ist es bevorzugt, dass zunächst das Verfahren zur Bildung des Beutels 2 bzw. zur Funktionssicherung der Kollabierbarkeit des Beutels 2 und im Anschluss das Verfahren zur Ermittlung des Ablösegrads durchgeführt wird. Ferner wird das Verfahren zur Bestimmung des Grads der Dichtigkeit vorzugsweise nach der Bildung des Beutels 2 und/oder der Ermittlung des Ablösegrads durchgeführt. Optional kann bei jedem der drei beschriebenen Verfahrensschritten (Ablösung des Beutels, Bestimmung des Ablösegrads und Dichtigkeitsprüfung), unabhängig von der Situation bei den anderen Verfahrensschritten, die Belüftungsöffnung 11 des Behälters 4 insbesondere durch Einsetzen in die Kammer 14 und insbesondere durch radiale Kompression in seiner Lage in der Kammer 14, vorzugsweise reversibel derart aufgeweitet sein oder werden, dass der Behälter in der Kammer 14 eine erweiterte Belüftungsöffnung 11 bzw. eine Belüftungsöffnung 11 mit einem vergrößerten (hydraulischen) Durchmesser bzw. einer vergrößerten Öffnungsquerschnittsfläche gegenüber einer Ausgangs- oder Ruheposition aufweist. Hierdurch können die Verfahrensgeschwindigkeit und -genauigkeit verbessert werden.

Dies wird vorzugsweise durch Verformung der Wand 7 im Bereich der Belüftungsöffnung 11 ermöglicht, so dass durch Ausstülpung des die Belüftungsöffnung 11 aufweisenden Bodenabschnitts des Behälters 4 die schlitzartige Belüftungsöffnung 11 reversibel aufgequetscht bzw. aufgespreizt wird. Dies kann durch die Kammer 14 bzw. eine Behälterhalterung in der Kammer 14, aber auch auf andere Weise erfolgen. Besonders bevorzugt erfolgt die Erweiterung der Belüftungsöffnung 11 durch eine Stufe, Schulter oder einen insbesondere konisch verjüngten Bereich der Kammer 14. In einem solchen Bereich unterschreitet der Innendurchmesser der Kammer 14 vorzugsweise den Außendurchmesser der Wand 7 des Behälters 4 in seinem Ausgangszustand, was bei Einsetzten des Behälters 4 in die Kammer 14 zu einer radialen Druckbeaufschlagung und infolge dessen zu einem Aufspreizen der Belüftungsöffnung 11 führt. Der Innendurchmesser der Kammer 14 auf Höhe der Belüftungsöffnung 11 ist bevorzugt zumindest im Wesentlichen achsensymmetrisch zu einer Längsachse der Kammer 14. Hierdurch kann eine Aufspreizung der Belüftungsöffnung 11 unabhängig von der Drehorientierung des Behälters 4 zur Kammer 14 in Bezug auf eine Längsachse des Behälters 4 und/oder der Kammer 14 erfolgen.

In einem weiteren Aspekt betrifft die vorliegende Erfindung ferner ein Computerprogrammprodukt bzw. ein computerlesbares Speichermedium mit Programmcodemitteln, die dazu ausgebildet sind, wenn sie ausgeführt werden, insbesondere auf einem Prozessor, Computer, Steuergerät o. dgl., ein Verfahren gemäß der vorliegenden Erfindung auszuführen. Die Anlage 1 kann und/oder die Komponenten der Anlage 1 können hierzu ein Steuergerät (nicht dargestellt) aufweisen, das dieses Computerprogrammprodukt enthält oder ausführen kann, wodurch die Anlage 1 in der beschriebenen Weise betreibbar wird. Insbesondere werden die Ventile 20, 21, 31 und/oder die Druckeinrichtungen 23, 24 in entsprechender Weise angesteuert.

Ein weiterer Aspekt der vorliegenden Erfindung betrifft die Verwendung der Anlage 1 zur Prüfung des Grads der Ablösung bzw. des bei kollabiertem Beutel 2 verfügbaren Gesamtvolumens, sowie, optional, zur Prüfung der Dichtigkeit des Beutels 2 bzw. des Beutelmaterials 5 im Hinblick auf eine Abdichtung, insbesondere im Hinblick auf eine luftdichte Abdichtung, der Entnahmeseite 12 gegenüber der Belüftungsseite 13 oder umgekehrt.

### Bezugszeichenliste:

- 1: Anlage
- 2: Beutel
- 3: Innenraum
- 4: Behälter
- 5: Beutelmaterial
- 6: Innenseite
- 7: Wand
- 8: Außenbehälter
- 9: Entnahmeöffnung
- 10: Halsbereich
- 11: Belüftungsöffnung
- 12: Entnahmeseite
- 13: Belüftungsseite
- 14: Kammer
- 15: Entnahmeöffnungsanschluss
- 16: Belüftungsöffnungsanschluss
- 17: Kanal
- 18: Dichtung
- 19: Dorn
- 20: Entnahmeseitiges Ventil
- 21: Belüftungsseitiges Ventil
- 22: Drucksensor
- 23: Entnahmeseitige Druckeinrichtung
- 24: Belüftungsseitige Druckeinrichtung
- 25: Differenzdruck
- 26: Entnahmeseitiger Druckverlauf
- 26P: Abblas-Druckpuls
- 27: Belüftungsseitiger Druckverlauf
- 28: Zyklus
- 29: Periodendauer
- 30: Druckspeichervolumen
- 31: Füllventil
- 32: Reststreifenbreite
- 33: erster Abschnitt
- 34: zweiter Abschnitt
- 35: dritter Abschnitt
- 36: Schwellwert
- 37: vierter Abschnitt
- A1: Start des Verfahrens
- A2: Verschluss der Kammer
- A3: Einsatzprüfung
- A4: Start des Ablösezyklusses
- A5: Grobleckerkennung/-auswertung
- A6: Prüfung auf Grobleck
- A7: Abbruch des Ablösevorgangs
- A8: Beginn des Ablösezyklusses
- A9: Überdruckbeaufschlagung
- A10: Entlüftungsphase
- A11: Anzahlüberprüfung
- A12: Anlegung des Behältermaterials
- A13: Kammerentlüftung
- A14: Ende des Ablösevorgangs
- D1: Start des Verfahrens
- D2: Verschließung der Kammer
- D3: Einsatzprüfung
- D4: Grobleck-Prüfung
- D5: Grobleck-Abbruch
- D6: Ablösegrad-Prüfung
- D7: Start der Dichtigkeitsprüfung
- D8: Wartezeit
- D9: Grobleck-Identifizierung
- D10: Feinleckauswertung
- D11: Auswurf des Behälters
- D12: Beendigung des Verfahrens
- F: Kraft
- P12: Entnahmeseitiger Druck
- P13: Belüftungsseitiger Druck
- V1: Start des Verfahrens
- V2: Verschluss der Kammer
- V3: Einsatzüberprüfung
- V4: Grobleck-Kontrolle
- V5: Prüfungsabbruch
- V6: Volumenermittlung
- V7: Grobleck-Vorprüfung
- V8: Volumenvorbereitung
- V9: Trennung
- V10: Bestimmung des Ablösegrads
- V11: Belüftung der Kammer
- V12: Beendigung des Verfahrens

## Patentansprüche

1. Verfahren zur Ermittlung eines Ablösegrads eines Beutels (2) von der Innenseite (6) der Wand (7) eines Behälters (4), eines Volumens, um das der Beutel (2) kollabierbar ist, und/oder einer hierzu korrespondierenden Kenngröße, wobei der Behälter (4) eine Entnahmeöffnung (9) und eine Belüftungsöffnung (11) aufweist, wobei ein Innenraum des Behälters (4) eine der Entnahmeöffnung (9) zugeordnete Entnahmeseite (12) und eine der Belüftungsöffnung (11) zugeordnete Belüftungsseite (13) aufweist, die durch den Beutel (2) voneinander getrennt sind,
**dadurch gekennzeichnet,**
**dass** ein Druckspeichervolumen (30) auf einen Solldruck gebracht und im Anschluss mit der Belüftungsseite (13) verbunden wird, so dass ein Druckausgleich zwischen dem Druckspeichervolumen (30) und der Belüftungsseite (13) erfolgt, und wobei nach erfolgtem Druckausgleich der resultierende Druck als Kenngröße oder zur Ermittlung des Ablösegrads oder des Volumens gemessen wird.

2. Verfahren nach Anspruch 1, **dadurch gekennzeichnet, dass** das Druckspeichervolumen (30), vorzugsweise durch Füllen mit einem Gas, insbesondere Luft, auf einen Überdruck gebracht wird, vorzugsweise wobei der Überdruck den Umgebungsdruck, insbesondere um mindestens 100 kPa, übersteigt.

3. Verfahren nach Anspruch 1 oder 2, **dadurch gekennzeichnet, dass** das Druckspeichervolumen (30) mehr als der Hälfte und/oder weniger als dem Vierfachen des Volumens des Behälters (4) oder Beutels (2) entspricht.

4. Verfahren nach einem der voranstehenden Ansprüche, **dadurch gekennzeichnet, dass** das Druckspeichervolumen (30) bei geschlossenem Ventil (21) zwischen der Belüftungsseite (13) und dem Druckspeichervolumen (30) auf Überdruck gebracht und dass im Anschluss das Druckspeichervolumen (30) durch Öffnung des Ventils (21) mit der Belüftungsseite (13) verbunden wird.

5. Verfahren nach Anspruch 4, **dadurch gekennzeichnet, dass** die Entnahmeseite (12) entlüftet oder evakuiert wird oder ist.

6. Verfahren nach einem der voranstehenden Ansprüche, **dadurch gekennzeichnet, dass** ein maximal zulässiger Druckwert definiert wird, der zu einem minimal beabsichtigten Ablösegrad korrespondiert, wobei eine mangelnde Ablösung von Beutelmaterial (5) vorzugweise automatisch detektiert wird, wenn der nach dem Druckausgleich resultierende Druck den maximal zulässigen Druckwert überschreitet.

7. Verfahren nach einem der voranstehenden Ansprüche, **dadurch gekennzeichnet, dass** bei Detektion einer mangelhaften Ablösung von Beutelmaterial (5) der Behälter (4) verworfen, insbesondere automatisch ausgeworfen und entsorgt, wird.

8. Verfahren nach einem der voranstehenden Ansprüche, **dadurch gekennzeichnet, dass** vor dem Druckausgleich Beutelmaterial (5) durch Überdruck auf der Entnahmeseite (12) an die Wand (7) angelegt wird.

9. Verfahren nach einem der voranstehenden Ansprüche, **dadurch gekennzeichnet, dass** die Entnahmeseite (12) im Vergleich zur Belüftungsseite (13) mit Überdruck beaufschlagt wird, so dass sich der Beutel (2) an die Wand (7) des Behälters (4) anlegt, und dass mit der oder durch die Belüftungsseite (13) ein abgeschlossenes Prüfvolumen erzeugt wird, in dem ein Druck oder eine Druckdifferenz nach oder in Abhängigkeit von einer Testdauer ermittelt wird, der oder die als Indikator für den Grad der Dichtigkeit des in dem Behälter (4) vorgesehenen Beutels (2) verwendet wird.

10. Anlage (1), ausgebildet zur Durchführung eines Verfahrens nach einem der Ansprüche 1 bis 9, wobei die Anlage eine Kammer (14) aufweist, in die ein Behälter (4) einsetzbar oder eingesetzt ist, wobei der Behälter (4) eine Entnahmeöffnung (9) und eine Belüftungsöffnung (11) und der Innenraum des Behälters (4) eine der Entnahmeöffnung (9) zugeordnete Entnahmeseite (12) und eine der Belüftungsöffnung (11) zugeordnete Belüftungsseite (13) aufweist, die durch das Beutelmaterial (5) voneinander getrennt sind, wobei die Kammer (14) die Entnahmeseite (12) und die Belüftungsseite (13) getrennt voneinander dicht anbindet,
**dadurch gekennzeichnet,**
**dass** die Anlage (1) ein Druckspeichervolumen (30) aufweist und dazu ausgebildet ist, das Druckspeichervolumen (30) auf einen Druck zu bringen, der sich von dem Druck der Belüftungsseite (13) unterscheidet, und wobei die Anlage (1) ein Ventil (21) aufweist, das das Druckspeichervolumen (30) mittels der Kammer (14) mit der Belüftungsseite (13) verbindet, und dass die Anlage (1) einen Drucksensor (22) zur Ermittlung einer Druckänderung bei Herstellung der Verbindung aufweist.

11. Anlage nach Anspruch 10, **dadurch gekennzeichnet, dass** die Anlage (1) einen oder mehrere Behälter (4) aufweist, vorzugsweise wobei eine Außenseite einer Wand (7) des Behälters (4) mit einer Innenwand der Kammer (14) korrespondiert, insbesondere wobei die Anlage (1) dazu ausgebildet ist, einen in die Kammer (14) aufgenommen Behälter (4) dicht anzubinden, so dass die Entnahmeseite (12) und die Belüftungsseite (13) mittels des Beutels (2) voneinander getrennt sind.

12. Anlage nach Anspruch 10 oder 11, **dadurch gekennzeichnet, dass** die Anlage (1) dazu ausgebildet ist, Behälter (4) aufeinander folgend in die Kammer (14) einzulegen und nach erfolgter Ablösung und/oder Prüfung des Ablösegrads und/oder der Dichtigkeitsprüfung solche Behälter (4) auszusortieren, die einen vorgegebenen Ablösegrad oder eine vorgegebene Dichtigkeit nicht erreichen.

13. Anlage nach einem der Ansprüche 10 bis 12, **dadurch gekennzeichnet, dass** der Drucksensor (22) mit dem resultierenden Gesamtsystem aufweisend das Druckspeichervolumen (30) und die Belüftungsseite (13) verbunden ist, so dass der Drucksensor (22) den aufgrund des Druckausgleichs resultierenden Druck messen kann.

14. Computerprogrammprodukt, umfassend Befehle, die bewirken, dass die Anlage nach einem der Ansprüche 10 bis 13 die Verfahrensschritte nach einem der Ansprüche 1 bis 9 ausführt.

15. Verwendung einer Anlage (1) gemäß einem der Ansprüche 10 bis 13 zur Herstellung eines Beutels (2) in einem Behälter (4) und/oder zur Prüfung eines Behälters (4) mit innenliegendem Beutel (2) gemäß einem der Ansprüche 1 bis 9.

## Claims

1. Method for determining a degree to which a bag (2) has peeled away from the inner face (6) of the wall (7) of a container (4), a volume by which the bag (2) can be collapsed and/or a corresponding parameter, the container (4) comprising an extraction opening (9) and a ventilation opening (11), an interior space of the container (4) comprising an extraction side (12) associated with the extraction opening (9) and a ventilation side (13) associated with the ventilation opening (11), which sides are separated from one another by the bag (2),
**characterized in**
**that** a pressure storage volume (30) is brought to a target pressure and is subsequently connected to the ventilation side (13) such that the pressure between the pressure storage volume (30) and the ventilation side (13) is equalized, and wherein the resultant pressure after the pressure equalization being measured as a parameter or to determine either the degree of peeling or the volume.

2. Method according to claim 1, **characterized in that** the pressure storage volume (30) is brought to an overpressure, preferably by filling it with a gas, in particular air, the overpressure preferably exceeding the ambient pressure, in particular by at least 100 kPa.

3. Method according to claim 1 or 2, **characterized in that** the pressure storage volume (30) is more than half and/or less than four times the volume of the container (4) or bag (2).

4. Method according to one of the preceding claims, **characterized in that** the pressure storage volume (30) is brought to overpressure with closed valve (21) between the ventilation side (13) and the pressure storage volume (30), and that subsequently the pressure storage volume (30) is connected to the ventilation side (13) by opening the valve (21).

5. Method according to claim 4, **characterized in that** the extraction side (12) is or is vented or evacuated.

6. Method according to one of the preceding claims, **characterized in that** a maximum permissible pressure value is defined which corresponds to a minimum in-tended degree of peeling, wherein a lack of peeling of bag material (5) is preferably automatically detected if the pressure resulting after pressure equalization exceeds the maximum permissible pressure value.

7. Method according to one of the preceding claims, **characterized in that** upon detection of a defective peeling of bag material (5), the container (4) is discarded, in particular automatically ejected and disposed of.

8. Method according to one of the preceding claims, **characterized in that**, before pressure equalization, bag material (5) is joined to the wall (7) by overpressure on the extraction side (12).

9. Method according to one of the preceding claims, **characterized in that** the extraction side (12) is subjected to overpressure in comparison with the ventilation side (13), so that the bag (2) bears against the wall (7) of the container (4), and that with or through the ventilation side (13) a closed test volume is created, in which a pressure or a pressure difference is determined after or in dependence on a test duration, which is used as an indicator for the degree of tightness of the bag (2) provided in the container (4).

10. System (1) configured for carrying out a method according to one of claims 1 to 9, wherein the system has a chamber (14) into which a container (4) can be inserted or is inserted, the container (4) comprising an extraction opening (9) and a ventilation opening (11), an interior space of the container (4) comprising an extraction side (12) associated with the extraction opening (9) and a ventilation side (13) associated with the ventilation opening (11), which sides are separated from one another by the bag (2), wherein the chamber (14) tightly connects the extraction side (12) and the ventilation side (13) separately from each other,
**characterized in**
**that** the system (1) has a pressure storage volume (30) and is configured to bring the pressure storage volume (30) to a pressure which is different from the pressure of the ventilation side (13), and wherein system (1) has a valve (21) which connects the pressure storage volume (30) to the ventilation side (13) by means of the chamber (14), and in that the system (1) has a pressure sensor (22) for determining a pressure change when the connection is made.

11. System according to claim 10, **characterized in that** the system (1) comprises one or more containers (4), preferably wherein an outer side of a wall (7) of the container (4) corresponds with an inner wall of the chamber (14), in particular wherein the system (1) is configured to tightly connect a container (4) received in the chamber (14) so that the extraction side (12) and the ventilation side (13) are separated from each other by means of the bag (2).

12. System according to claim 10 or 11, **characterized in that** the system (1) is configured to insert containers (4) successively into the chamber (14) and, after peeling and/or testing of the degree of peeling and/or the tightness test has been carried out, to sort out those containers (4) which do not achieve a predetermined degree of peeling or a predetermined tightness.

13. System according to any one of claims 10 to 12, **characterized in that** the pressure sensor (22) is connected to the resulting overall system comprising the pressure storage volume (30) and the ventilation side (13), so that the pressure sensor (22) can measure the pressure resulting from the pressure equalization.

14. A computer program product comprising instructions that cause the system of any one of claims 10 to 13 to perform the method steps of any one of claims 1 to 9.

15. Use of a system (1) according to any one of claims 10 to 13 for producing a bag (2) in a container (4) and/or for testing a container (4) with an internal bag (2) according to any one of claims 1 to 9.

## Revendications

1. Procédé de détermination d'un degré de décollement d'une poche (2) du côté interne (6) de la paroi (7) d'un contenant (4), d'un volume, duquel la poche (2) peut être repliée, et/ou d'une grandeur caractéristique correspondante, dans lequel le contenant (4) présente une ouverture de prélèvement (9) et une ouverture d'aération (11), dans lequel un espace intérieur du contenant (4) présente un côté de prélèvement (12) associé à l'ouverture de prélèvement (9) et un côté d'aération (13) associé à l'ouverture d'aération (11), qui sont séparés l'un de l'autre par la poche (2),
**caractérisé en ce**
**qu'**un volume de stockage de pression (30) est amené à une pression de consigne et est ensuite relié au côté d'aération (13) de sorte qu'une compensation de pression a lieu entre le volume de stockage de pression (30) et le côté d'aération (13), et dans lequel une fois la compensation de pression réalisée avec succès, la pression en résultant est mesurée en tant que grandeur caractéristique ou pour déterminer le degré de décollement ou le volume.

2. Procédé selon la revendication 1, **caractérisé en ce que** le volume de stockage de pression (30) est amené à une surpression, de préférence par un remplissage avec un gaz, en particulier avec de l'air, dans lequel de préférence la surpression dépasse la pression environnante, en particulier d'au moins 100 kPa.

3. Procédé selon la revendication 1 ou 2, **caractérisé en ce que** le volume de stockage de pression (30) correspond à plus 0,5 fois et/ou à moins de 4 fois le volume du contenant (4) ou de la poche (2).

4. Procédé selon l'une quelconque des revendications précédentes, **caractérisé en ce que** le volume de stockage de pression (30) est amené sur une surpression en cas de soupape (21) fermée entre le côté d'aération (13) et le volume de stockage de pression (30), et qu'ensuite le volume de stockage de pression (30) est relié au côté d'aération (13) par l'ouverture de la soupape (21).

5. Procédé selon la revendication 4, **caractérisé en ce que** l'air est évacué du côté de prélèvement (12) ou le vide est effectué sur le côté de prélèvement ou le côté de prélèvement est aéré ou est sous vide.

6. Procédé selon l'une quelconque des revendications précédentes, **caractérisé en ce qu'**une valeur de pression autorisée au maximum est définie, laquelle correspond à un degré de décollement envisagé au minimum, dans lequel un décollement insuffisant du matériau de poche (5) est de préférence automatiquement détecté lorsque la pression résultant après la compensation de pression dépasse la valeur de pression autorisée au maximum.

7. Procédé selon l'une quelconque des revendications précédentes, **caractérisé en ce qu'**en cas de détection d'un décollement insuffisant du matériau de poche (5), le contenant (4) est rejeté, en particulier est automatiquement éjecté et recyclé.

8. Procédé selon l'une quelconque des revendications précédentes, **caractérisé en ce qu'**avant la compensation de pression, du matériau de poche (5) est placé sur la paroi (7) par une surpression sur le côté de prélèvement (12).

9. Procédé selon l'une quelconque des revendications précédentes, **caractérisé en ce que** le côté de prélèvement (12) est soumis à l'action d'une surpression en comparaison avec le côté d'aération (13) de sorte que la poche (2) se place sur la paroi (7) du contenant (4), et qu'est produit avec ou par le côté d'aération (13) un volume de contrôle fermé hermétiquement, dans lequel est déterminée, après ou en fonction d'une durée de test, une pression ou une pression différentielle qui est utilisée en tant qu'indicateur du degré d'étanchéité de la poche (2) prévue dans le contenant (4).

10. Installation (1) réalisée pour mettre en oeuvre un procédé selon l'une quelconque des revendications 1 à 9, dans laquelle l'installation présente une chambre (14), dans laquelle un contenant (4) peut être inséré ou est inséré, dans laquelle le contenant (4) présente une ouverture de prélèvement (9) et une ouverture d'aération (11) et l'espace intérieur du contenant (4) présente un côté de prélèvement (12) associé à l'ouverture de prélèvement (9) et un côté d'aération (13) associé à l'ouverture d'aération (11), qui sont séparés l'un de l'autre par le matériau de poche (5), dans laquelle la chambre (14) attache de manière étanche avec séparation l'un de l'autre le côté de prélèvement (12) et le côté d'aération (13),
**caractérisée en ce**
**que** l'installation (1) présente un volume de stockage de pression (30) et est réalisée pour amener le volume de stockage de pression (30) sur une pression, qui se distingue de la pression du côté d'aération (13), et dans laquelle l'installation (1) présente une soupape (21), qui relie le volume de stockage de pression (30) au moyen de la chambre (14) au côté d'aération (13), et que l'installation (1) présente un capteur de pression (22) destiné à déterminer une variation de pression lors de l'établissement de la liaison.

11. Installation selon la revendication 10, **caractérisée en ce que** l'installation (1) présente un ou plusieurs contenants (4), dans laquelle de préférence un côté extérieur d'une paroi (7) du contenant (4) correspond à une paroi interne de la chambre (14), en particulier dans laquelle l'installation (1) est réalisée pour attacher de manière étanche un contenant (4) logé dans la chambre (14) de sorte que le côté de prélèvement (12) et le côté d'aération (13) sont séparés l'un de l'autre au moyen de la poche (2).

12. Installation selon la revendication 10 ou 11, **caractérisée en ce que** l'installation (1) est réalisée pour placer des contenants (4) à la suite les uns des autres dans la chambre (14) et pour trier, une fois le décollement réalisé avec succès et/ou le contrôle du degré de décollement réalisé avec succès et/ou le contrôle de l'étanchéité réalisé avec succès, des contenants (4), qui précisément n'atteignent pas un degré de décollement prédéfini ou une étanchéité prédéfinie.

13. Installation selon l'une quelconque des revendications 10 à 12, **caractérisée en ce que** le capteur de pression (22) est relié au système global en résultant présentant le volume de stockage de pression (30) et le côté d'aération (13) de sorte que le capteur de pression (22) peut mesurer la pression en résultant du fait de la compensation de pression.

14. Produit-programme informatique comprenant des instructions, qui ont pour effet que l'installation selon l'une quelconque des revendications 10 à 13 exécute les étapes de procédé selon l'une quelconque des revendications 1 à 9.

15. Utilisation d'une installation (1) selon l'une quelconque des revendications 10 à 13 pour fabriquer une poche (2) dans un contenant (4) et/ou pour contrôler un contenant (4) avec une poche (2) située à l'intérieur selon l'une quelconque des revendications 1 à 9.
